# EUROPEAN PATENT APPLICATION

(11) **EP 4 534 733 A1**
(43) Date of publication of application: **09.04.2025**
(21) Application number: 23823742.4
(22) Date of filing: 02.06.2023
(51) Int. Cl.: C25B 11/056, C25B 11/065, C25B 9/00, C25B 9/23, C25B 1/04

(54) **LAMINATE FOR WATER ELECTROLYSIS DEVICE, MEMBRANE ELECTRODE ASSEMBLY FOR WATER ELECTROLYSIS DEVICE, AND WATER ELECTROLYSIS DEVICE**

(30) Priority: 14.06.2022 JP 2022095542; 14.06.2022 JP 2022095543
(71) Applicant: Toppan Holdings Inc., Tokyo 110-0016 (JP)
(72) Inventor: INAGAWA, Yuri, Tokyo 110-0016 (JP); MORIOKA, Hiroyuki, Tokyo 110-0016 (JP); CHINONE, Hiroyuki, Tokyo 110-0016 (JP); UENO, Masahiro, Tokyo 110-0016 (JP)
(74) Representative: TBK
(86) International application number: PCT/JP2023/020691
(87) International publication number: WO 2023/243449

(57) **Abstract**

A laminate for a water electrolysis device includes a polymer electrolyte membrane and an electrode catalyst layer provided on one surface of the polymer electrolyte membrane. The electrode catalyst layer includes a catalyst, a polymer electrolyte, and a fibrous material. A membrane electrode assembly for a water electrolysis device includes the laminate for a water electrolysis device and a second electrode catalyst layer, and includes an electrode catalyst layer, a polymer electrolyte membrane, and a second electrode catalyst layer in this order.

## Description

### Technical Field

The present disclosure relates to a laminate for a water electrolysis device, a membrane electrode assembly for a water electrolysis device, and a water electrolysis device.

### Background Art

In recent years, the use of hydrogen as CO₂-free energy that can be generated from various resources as main energy has accelerated to achieve carbon neutrality. As a method of producing such hydrogen, a method of performing water electrolysis using renewable energy is promising. In general, alkaline water electrolysis and polymer electrolyte membrane (PEM) water electrolysis are known as a method of performing water electrolysis, and in particular, PEM water electrolysis has attracted attention as a method enabling downsizing of a water electrolysis device by high-efficiency operation.

APEM water electrolysis device generally includes a pair of main electrodes and a membrane electrode assembly provided between the pair of main electrodes. The membrane electrode assembly has a laminate obtained by providing a first electrode catalyst layer on one surface of a proton-conducting solid polymer electrolyte membrane, and a second electrode catalyst layer provided so that the solid polymer electrolyte membrane is sandwiched between the first electrode catalyst layer and the second electrode catalyst layer.

The laminate is obtained by forming an electrode catalyst layer on one surface of a solid polymer electrolyte membrane using, for example, a coating method (for example, see Patent Literature 1 below).

### Citation List

### Patent Literature

Patent Literature 1: Japanese Unexamined Patent Publication No. 2019-83085

### Summary of Invention

### Technical Problem

However, in the laminate described in Patent Literature 1, cracks may occur in the electrode catalyst layer, and there is room for improvement in suppressing the occurrence of cracks.

The present disclosure has been contrived in view of the above-described problem, and an object thereof is to provide a laminate for a water electrolysis device, a membrane electrode assembly for a water electrolysis device, and a water electrolysis device which can suppress the occurrence of cracks in an electrode catalyst layer.

### Solution to Problem

The inventors have studied to solve the above-described problem. First, in a coating method, in a case where an electrode catalyst layer forming composition is applied to a surface of a solid polymer electrolyte membrane, the solid polymer electrolyte membrane swells due to infiltration of the moisture in the electrode catalyst layer forming composition. Then, the inventors thought that during drying of the solid polymer electrolyte membrane, excessive stress is applied to the electrode catalyst layer due to discharge of the moisture, and as a result, cracks may occur in the electrode catalyst layer. Therefore, the inventors have conducted further intensive studies, and as a result, found that the above-described problem can be solved in a case where the electrode catalyst layer includes a fibrous material in addition to a catalyst and a polymer electrolyte, and completed the present disclosure.

That is, a first aspect of the present disclosure provides a laminate for a water electrolysis device, including: a polymer electrolyte membrane; and an electrode catalyst layer provided on one surface of the polymer electrolyte membrane, in which the electrode catalyst layer includes a catalyst, a polymer electrolyte, and a fibrous material.

According to the laminate for a water electrolysis device, it is possible to suppress the occurrence of cracks in the electrode catalyst layer. Therefore, when a voltage is applied to a membrane electrode assembly having the laminate of the present disclosure in a water electrolysis device including the membrane electrode assembly, the disturbance of a potential distribution in the electrode catalyst layer is suppressed, and thus it is possible to suppress a decrease in water electrolysis performance of the water electrolysis device, and improve the durability of the water electrolysis device.

The reason why the occurrence of cracks in the electrode catalyst layer is suppressed by the laminate for a water electrolysis device is thought to be as follows.

That is, in the formation of the electrode catalyst layer on one surface of the polymer electrolyte membrane, even in a case where, after swelling of the polymer electrolyte membrane due to infiltration of moisture, as the polymer electrolyte membrane shrinks due to discharge of the moisture during drying of the polymer electrolyte membrane, the electrode catalyst layer shrinks and excessive stress is thus applied to the electrode catalyst layer, the stress is dispersed due to the fibrous material, which is included in the electrode catalyst layer in addition to the catalyst and the polymer electrolyte and is appropriately entangled. It is thought that the occurrence of cracks is suppressed in the electrode catalyst layer due to the above reason.

In addition, in a case where a voltage is applied to a membrane electrode assembly including the laminate of the present disclosure for the purpose of water electrolysis, a part where stress is excessive may be locally generated due to oxygen gas or hydrogen gas generated in the electrode catalyst layer. Even in that case, such excessive stress is dispersed due to the fibrous material included in the electrode catalyst layer. It is thought that the occurrence of cracks is suppressed in the electrode catalyst layer due to the above reason.

A second aspect of the present disclosure provides the laminate for a water electrolysis device according to the first aspect, in which an average fiber diameter of the fibrous material is within a range of 100 nm or more and 1 µm or less.

According to the laminate for a water electrolysis device, the occurrence of cracks is further suppressed in the electrode catalyst layer. In addition, according to the laminate for a water electrolysis device, the adhesion between the polymer electrolyte membrane and the electrode catalyst layer can be improved. Therefore, it is possible to suppress the generation of a void due to peeling between the polymer electrolyte membrane and the electrode catalyst layer, and thus it is possible to further suppress an increase in resistance of the laminate due to the void. Due to the above-described reasons, according to the laminate for a water electrolysis device, it is possible to further suppress a decrease in water electrolysis performance.

The reason why the adhesion between the polymer electrolyte membrane and the electrode catalyst layer can be improved by the laminate for a water electrolysis device is thought to be as follows.

That is, it is thought that this is because the stress applied to the electrode catalyst layer is effectively dispersed by the fibrous material, and the shear force at an interface between the electrode catalyst layer and the polymer electrolyte membrane can be reduced.

A third aspect of the present disclosure provides the laminate for a water electrolysis device according to the first or second aspect, in which the fibrous material is a material having a property of adsorbing the polymer electrolyte.

According to the laminate for a water electrolysis device, the occurrence of cracks is further suppressed in the electrode catalyst layer.

The reason why the above effect is obtained is thought to be as follows.

That is, it is thought that this is because the adsorption of the fibrous material to the polymer electrolyte further increases the strength of the electrode catalyst layer.

A fourth aspect of the present disclosure provides the laminate for a water electrolysis device according to any one of the first to third aspects, in which the fibrous material includes at least one of carbon fibers and polymer fibers.

According to the laminate for a water electrolysis device, due to the fibrous material, cracks are less likely to occur in the electrode catalyst layer, and the durability of the electrode catalyst layer increases.

A fifth aspect of the present disclosure provides the laminate for a water electrolysis device according to the fourth aspect, in which the polymer fibers have a cation exchange group.

A sixth aspect of the present disclosure provides the laminate for a water electrolysis device according to the fifth aspect, in which the polymer electrolyte included in the electrode catalyst layer is an ionomer.

According to the laminate for a water electrolysis device, the proton conductivity increases due to a linear proton-conducting network formed on the polymer fibers. In addition, in a case where the polymer fibers have a cation exchange group, the cation exchange group is ionically bonded to the polymer electrolyte and can strongly adsorb the polymer electrolyte, and thus the adhesion between the polymer fibers and the polymer electrolyte can be further increased. In addition, since the polymer electrolyte adsorbed to the polymer fibers is an ionomer, a proton conductive path is formed by the ionomer, which provides high water electrolysis performance in a water electrolysis device.

A seventh aspect of the present disclosure provides the laminate for a water electrolysis device according to the fourth aspect, in which the polymer fibers have proton conductivity.

According to the laminate for a water electrolysis device, a proton conductive path is formed in the polymer fibers, the proton conductivity in the electrode catalyst layer is improved, and high electrolysis performance can be imparted to a water electrolysis device.

An eighth aspect of the present disclosure provides the laminate for a water electrolysis device according to the fourth aspect, in which the electrode catalyst layer includes an aggregate of the polymer fibers, an average fiber length of the polymer fibers is more than 20 µm, and a size of a void surrounding the aggregate is 20 µm or less.

In this case, since the void in the electrode catalyst layer is small, it is possible to further sufficiently suppress the occurrence of cracks in the electrode catalyst layer, and thus a decrease in water electrolysis performance is suppressed.

A ninth aspect of the present disclosure provides the laminate for a water electrolysis device according to the fourth aspect, in which the electrode catalyst layer includes an aggregate of the polymer fibers, an average fiber length of the polymer fibers is 20 µm or less, and a size of a void surrounding the aggregate is equal to or less than the average fiber length of the polymer fibers.

In this case, since the void in the electrode catalyst layer is small, it is possible to further sufficiently suppress the occurrence of cracks in the electrode catalyst layer, and as a result, a decrease in water splitting performance is suppressed.

A tenth aspect of the present disclosure provides the laminate for a water electrolysis device according to the first aspect, in which the electrode catalyst layer is a cathode-side electrode catalyst layer, the catalyst is carried on a conductive carrier, the fibrous material consists of carbon fibers, and a blending amount of the fibrous material is within a range of 5 parts by mass or more and 50 parts by mass or less relative to 100 parts by mass of the carrier.

In this case, the blending amount of the carbon fibers is preferably within a range of 5 parts by mass or more and 20 parts by mass or less relative to 100 parts by mass of the carrier. By adjusting the blending amount of the carbon fibers to within the above range, the structure in which the carbon fibers are entangled is suitably formed, and thus the strength of the electrode catalyst layer further increases. As a result, cracks are less likely to occur and the carbon fibers act to favorably assist the electron conductivity in the electrode catalyst layer, so that good electrolysis performance is obtained.

An eleventh aspect of the present disclosure provides the laminate for a water electrolysis device according to the first aspect, in which the electrode catalyst layer is a cathode-side electrode catalyst layer, the catalyst is carried on a conductive carrier, the fibrous material consists of polymer fibers, and a blending amount of the fibrous material is within a range of 5 parts by mass or more and 20 parts by mass or less relative to 100 parts by mass of the carrier.

In this case, the blending amount of the polymer fibers is preferably within a range of 5 parts by mass or more and 20 parts by mass or less relative to 100 parts by mass of the carrier. By adjusting the blending amount of the polymer fibers to within the above range, the structure in which the polymer fibers are entangled is suitably formed, and thus the strength of the electrode catalyst layer further increases. As a result, cracks are less likely to occur and the polymer fibers act to favorably assist the electron conductivity in the electrode catalyst layer, so that good electrolysis performance is obtained.

A twelfth aspect of the present disclosure provides the laminate for a water electrolysis device according to the tenth or eleventh aspect, in which the carrier consists of carbon particles.

A thirteenth aspect of the present disclosure provides a water electrolysis device including: a membrane electrode assembly; and a pair of main electrodes provided so that the membrane electrode assembly is sandwiched by the main electrodes, in which the membrane electrode assembly has the laminate for a water electrolysis device according to any one of the first to twelfth aspects, and a second electrode catalyst layer provided on a surface of the polymer electrolyte membrane of the laminate for a water electrolysis device opposite to the electrode catalyst layer.

The water electrolysis device of the present disclosure includes the above-described laminate for a water electrolysis device. Therefore, according to the water electrolysis device of the present disclosure, the occurrence of cracks in the electrode catalyst layer is suppressed in the laminate. Therefore, when a voltage is applied between the pair of main electrodes, the disturbance of a potential distribution is suppressed in the electrode catalyst layer of the laminate included in the membrane electrode assembly, and thus it is possible to suppress a decrease in water electrolysis performance and improve the durability.

It is thought that even in a case where a voltage is applied between the pair of main electrodes for the purpose of water electrolysis and is thus applied to the laminate included in the membrane electrode assembly, and a part where stress is excessive is locally generated due to oxygen gas or hydrogen gas generated in the electrode catalyst layer, such excessive stress is dispersed due to the fibrous material included in the electrode catalyst layer. It is thought that the occurrence of cracks is suppressed in the electrode catalyst layer due to the above reason. Therefore, it is thought that due to the above fact as well, the durability of the water electrolysis device is improved.

A fourteenth aspect of the present disclosure provides a membrane electrode assembly for a water electrolysis device, including: the laminate for a water electrolysis device according to the first aspect; and a second electrode catalyst layer, in which the electrode catalyst layer, the polymer electrolyte membrane, and the second electrode catalyst layer are provided in this order, the second electrode catalyst layer is a cathode-side electrode catalyst layer, and the electrode catalyst layer is the anode-side electrode catalyst layer, and includes a catalyst-containing material containing the catalyst, the polymer electrolyte, and the fibrous material.

According to the membrane electrode assembly for a water electrolysis device, it is possible to suppress the occurrence of cracks in the anode-side electrode catalyst layer. Therefore, in the membrane electrode assembly of the present disclosure, when a voltage is applied in a water electrolysis device, the disturbance of a potential distribution in the anode-side electrode catalyst layer is suppressed, and thus it is possible to suppress a decrease in water electrolysis performance of the water electrolysis device, and improve the durability of the water electrolysis device.

The reason why the occurrence of cracks in the anode-side electrode catalyst layer is suppressed by the membrane electrode assembly for a water electrolysis device is thought to be as follows.

That is, in the formation of the anode-side electrode catalyst layer on one surface of the polymer electrolyte membrane, even in a case where, after swelling of the polymer electrolyte membrane due to infiltration of moisture, as the polymer electrolyte membrane shrinks due to discharge of the moisture during drying of the polymer electrolyte membrane, the anode-side electrode catalyst layer shrinks and excessive stress is thus applied to the anode-side electrode catalyst layer, the stress is dispersed due to the fibrous material, which is included in the anode-side electrode catalyst layer in addition to the catalyst-containing material and the polymer electrolyte and is appropriately entangled. It is thought that the occurrence of cracks is suppressed in the anode-side electrode catalyst layer due to the above reason.

In addition, in a case where a voltage is applied to the membrane electrode assembly of the present disclosure for the purpose of water electrolysis, a part where stress is excessive may be locally generated due to oxygen gas generated in the anode-side electrode catalyst layer. Even in that case, such excessive stress is dispersed due to the fibrous material included in the anode-side electrode catalyst layer. It is thought that the occurrence of cracks is suppressed in the anode-side electrode catalyst layer due to the above reason.

A fifteenth aspect of the present disclosure provides the membrane electrode assembly for a water electrolysis device according to the fourteenth aspect, in which the cathode-side electrode catalyst layer includes a catalyst-containing material, a polymer electrolyte, and a fibrous material.

According to the membrane electrode assembly for a water electrolysis device, it is possible to suppress the occurrence of cracks in the cathode-side electrode catalyst layer. Therefore, in the membrane electrode assembly of the present disclosure, when a voltage is applied in a water electrolysis device, the disturbance of a potential distribution in the cathode-side electrode catalyst layer is also suppressed, and thus it is possible to further suppress a decrease in water electrolysis performance of the water electrolysis device, and further improve the durability of the water electrolysis device.

A sixteenth aspect of the present disclosure provides the membrane electrode assembly for a water electrolysis device according to the fifteenth aspect, in which the fibrous material of the cathode-side electrode catalyst layer includes at least one of carbon fibers and polymer fibers, and the fibrous material of the anode-side electrode catalyst layer includes polymer fibers.

According to the membrane electrode assembly for a water electrolysis device, cracks are particularly less likely to occur in the cathode-side electrode catalyst layer and the anode-side electrode catalyst layer, and the durability is likely to increase.

A seventeenth aspect of the present disclosure provides the membrane electrode assembly for a water electrolysis device according to the sixteenth aspect, in which the polymer fibers have proton conductivity.

According to the membrane electrode assembly for a water electrolysis device, in the electrode catalyst layer in which the polymer fibers have proton conductivity, of the cathode-side electrode catalyst layer and the anode-side electrode catalyst layer, the proton conductivity increases by the formation of a linear proton-conducting network, and thus the proton conductivity can be improved. As a result, it is possible to suppress a voltage loss during water electrolysis in a water electrolysis device.

An eighteenth aspect of the present disclosure provides the membrane electrode assembly for a water electrolysis device according to the sixteenth aspect, in which the polymer fibers have a cation exchange group.

A nineteenth aspect of the present disclosure provides the laminate for a water electrolysis device according to the fifth aspect, in which the polymer electrolyte included in the electrode catalyst layer is an ionomer.

According to the membrane electrode assembly for a water electrolysis device, the proton conductivity increases due to a linear proton-conducting network formed on the polymer fibers. In addition, in a case where the polymer fibers have a cation exchange group, the cation exchange group is ionically bonded to the polymer electrolyte and can strongly adsorb the polymer electrolyte, and thus the adhesion between the polymer fibers and the polymer electrolyte can be further increased. In addition, since the polymer electrolyte adsorbed to the polymer fibers is an ionomer, a proton conductive path is formed by the ionomer, which provides high water electrolysis performance in a water electrolysis device.

A twentieth aspect of the present disclosure provides the membrane electrode assembly for a water electrolysis device according to any one of the fifteenth to nineteenth aspects, in which the fibrous material in the cathode-side electrode catalyst layer consists of carbon fibers, an average fiber diameter of the fibrous material is within a range of 50 nm or more and 300 nm or less, and an average fiber length of the fibrous material is within a range of 1.0 µm or more and 20 µm or less.

According to the membrane electrode assembly for a water electrolysis device, since the structure in which the fibrous material is entangled is suitably formed in the cathode-side electrode catalyst layer, the strength of the cathode-side electrode catalyst layer further increases, and thus it is possible to further suppress the occurrence of cracks.

A twenty-first aspect of the present disclosure provides the membrane electrode assembly for a water electrolysis device according to any one of the fifteenth to twentieth aspects, in which the fibrous material in the cathode-side electrode catalyst layer consists of polymer fibers, an average fiber diameter of the fibrous material is within a range of 100 nm or more and 500 nm or less, and an average fiber length of the fibrous material is within a range of 1.0 µm or more and 40 µm or less.

According to the membrane electrode assembly for a water electrolysis device, since the structure in which the fibrous material is entangled is suitably formed in the cathode-side electrode catalyst layer, the strength of the cathode-side electrode catalyst layer further increases, and thus it is possible to further suppress the occurrence of cracks.

A twenty-second aspect of the present disclosure provides the membrane electrode assembly for a water electrolysis device according to any one of the fourteenth to twenty-first aspects, in which an average fiber diameter of the fibrous material in the anode-side electrode catalyst layer is within a range of 100 nm or more and 500 nm or less, and an average fiber length of the fibrous material is within a range of 1.0 µm or more and 40 µm or less.

According to the membrane electrode assembly for a water electrolysis device, since the structure in which the fibrous material is entangled is suitably formed in the anode-side electrode catalyst layer, the strength of the anode-side electrode catalyst layer further increases, and thus it is possible to further suppress the occurrence of cracks.

A twenty-third aspect of the present disclosure provides the membrane electrode assembly for a water electrolysis device according to any one of the fifteenth to twenty-first aspects, in which the catalyst-containing material in the cathode-side electrode catalyst layer consists of catalyst-carrying particles having a catalyst and a carrier carrying the catalyst, the fibrous material in the cathode-side electrode catalyst layer consists of carbon fibers, and a blending amount of the fibrous material is within a range of 0.3 times or more and 1.5 times or less a mass of the carrier.

According to the membrane electrode assembly for a water electrolysis device, since the structure in which the carbon fibers are entangled is suitably formed in the cathode-side electrode catalyst layer, the strength of the cathode-side electrode catalyst layer further increases, and thus it is possible to further suppress the occurrence of cracks.

A twenty-fourth aspect of the present disclosure provides the membrane electrode assembly for a water electrolysis device according to any one of the fifteenth to twenty-first aspects and the twenty-third aspect, in which the catalyst-containing material in the cathode-side electrode catalyst layer consists of catalyst-carrying particles having a catalyst and a carrier carrying the catalyst, the fibrous material in the cathode-side electrode catalyst layer consists of polymer fibers, and a blending amount of the fibrous material is within a range of 0.05 times or more and 0.3 times or less a mass of the carrier.

According to the membrane electrode assembly for a water electrolysis device, since the structure in which the carbon fibers are entangled is suitably formed in the cathode-side electrode catalyst layer, the strength of the cathode-side electrode catalyst layer further increases, and thus it is possible to further suppress the occurrence of cracks.

A twenty-fifth aspect of the present disclosure provides the membrane electrode assembly for a water electrolysis device according to any one of the fourteenth to twenty-fourth aspects, in which a content percentage of the fibrous material in the anode-side electrode catalyst layer is within a range of 0.5 mass% or more and 20 mass% or less.

According to the membrane electrode assembly for a water electrolysis device, since the amount of the fibrous material is suitable for being contained in the anode-side electrode catalyst layer and the structure in which the fibrous material is entangled is suitably formed, the strength of the anode-side electrode catalyst layer further increases, and thus the occurrence of cracks is further suppressed.

A twenty-sixth aspect of the present disclosure provides the membrane electrode assembly for a water electrolysis device according to any one of the fifteenth to twenty-fourth aspects, in which a ratio R (DF1/DF2) of a content percentage (DF1) of the fibrous material in the cathode-side electrode catalyst layer to a content percentage (DF2) of the fibrous material in the anode-side electrode catalyst layer is more than 1.

According to the membrane electrode assembly for a water electrolysis device, the strength of the anode-side electrode catalyst layer further increases, and thus the deformation of the polymer electrolyte membrane and the occurrence of cracks can be further suppressed when the anode-side electrode catalyst layer is formed after formation of the cathode-side electrode catalyst layer.

A twenty-seventh aspect of the present disclosure provides the membrane electrode assembly for a water electrolysis device according to the twenty-sixth aspect, in which the fibrous material in the cathode-side electrode catalyst layer consists of carbon fibers, and the ratio R is 5 or more and 30 or less.

According to the membrane electrode assembly for a water electrolysis device, in a case where the ratio R is within the above range, the strength of the anode-side electrode catalyst layer further increases, and thus the deformation of the polymer electrolyte membrane and the occurrence of cracks can be further suppressed when the anode-side electrode catalyst layer is formed after formation of the cathode-side electrode catalyst layer.

A twenty-eighth aspect of the present disclosure provides the membrane electrode assembly for a water electrolysis device according to the twenty-sixth aspect, in which the fibrous material in the cathode-side electrode catalyst layer consists of polymer fibers, and the ratio R is 1.1 or more and 15 or less.

According to the membrane electrode assembly for a water electrolysis device, in a case where the ratio R is within the above range, the strength of the anode-side electrode catalyst layer further increases, and thus the deformation of the polymer electrolyte membrane and the occurrence of cracks can be further suppressed when the anode-side electrode catalyst layer is formed after formation of the cathode-side electrode catalyst layer.

A twenty-ninth aspect of the present disclosure provides the membrane electrode assembly for a water electrolysis device according to any one of the fourteenth to twenty-eighth aspects, in which in at least one of the cathode-side electrode catalyst layer and the anode-side electrode catalyst layer, the polymer electrolyte is an ionomer, and the fibrous material consists of ionomer adsorbing fibers having a property of adsorbing the ionomer.

According to the membrane electrode assembly for a water electrolysis device, the strength of the electrode catalyst layer in which the polymer electrolyte is an ionomer and the fibrous material consists of ionomer adsorbing fibers having a property of adsorbing the ionomer increases, and high water electrolysis performance is obtained in a water electrolysis device including the membrane electrode assembly.

A thirtieth aspect of the present disclosure provides a water electrolysis device including, in order: a cathode; a membrane electrode assembly; and an anode, in which the membrane electrode assembly is the membrane electrode assembly for a water electrolysis device according to any one of the fourteenth to twenty-ninth aspects.

The water electrolysis device of the present disclosure includes the above-described membrane electrode assembly for a water electrolysis device. Therefore, according to the water electrolysis device of the present disclosure, the occurrence of cracks in the anode-side electrode catalyst layer is suppressed in the membrane electrode assembly. Therefore, when a voltage is applied between the cathode and the anode, the disturbance of a potential distribution is suppressed in the electrode catalyst layer included in the membrane electrode assembly, and thus it is possible to suppress a decrease in water electrolysis performance and improve the durability.

It is thought that even in a case where a voltage is applied between the cathode and the anode for the purpose of water electrolysis and is thus applied to the membrane electrode assembly, and a part where stress is excessive is locally generated due to oxygen gas generated in the electrode catalyst layer, such excessive stress is dispersed due to the fibrous material included in the electrode catalyst layer. It is thought that the occurrence of cracks is suppressed in the electrode catalyst layer due to the above reason. Therefore, it is thought that due to the above fact as well, the durability of the water electrolysis device is improved.

### Advantageous Effects of Invention

According to the present disclosure, provided are a laminate for a water electrolysis device, a membrane electrode assembly for a water electrolysis device, and a water electrolysis device in which the occurrence of cracks in an electrode catalyst layer can be suppressed.

### Brief Description of Drawings

FIG. 1 is a cross-sectional view showing an embodiment of a laminate for a water electrolysis device of the present disclosure.
FIG. 2 is a view schematically and partially showing a main part of an electrode catalyst layer of FIG. 1.
FIG. 3 is a cross-sectional view showing an example of a catalyst-containing material of FIG. 2.
FIG. 4 is a cross-sectional view showing an embodiment of a membrane electrode assembly for a water electrolysis device of the present disclosure.
FIG. 5 is a view schematically and partially showing a main part of a second electrode catalyst layer of FIG. 4.
FIG. 6 is a cross-sectional view showing an embodiment of a water electrolysis device of the present disclosure.
FIG. 7 is a cross-sectional view schematically showing another example of the electrode catalyst layer of FIG. 1.

### Description of Embodiments

Hereinafter, embodiments of the present disclosure will be described in detail.

### <Laminate for Water Electrolysis Device>

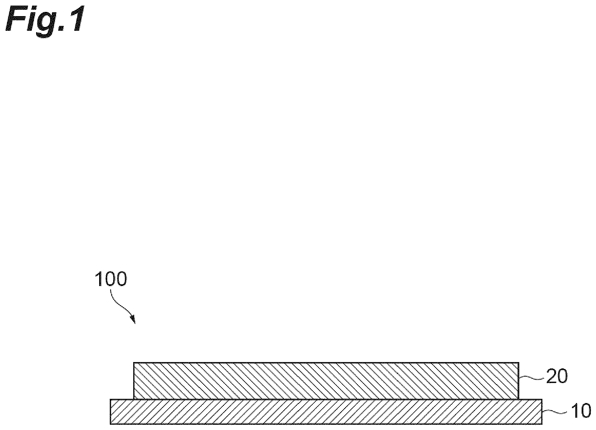

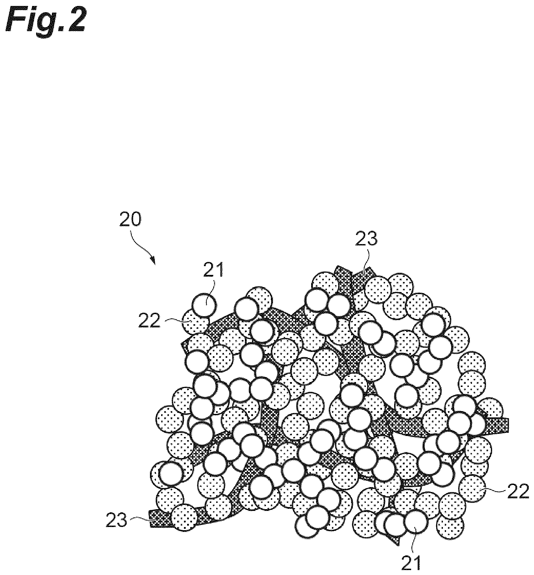

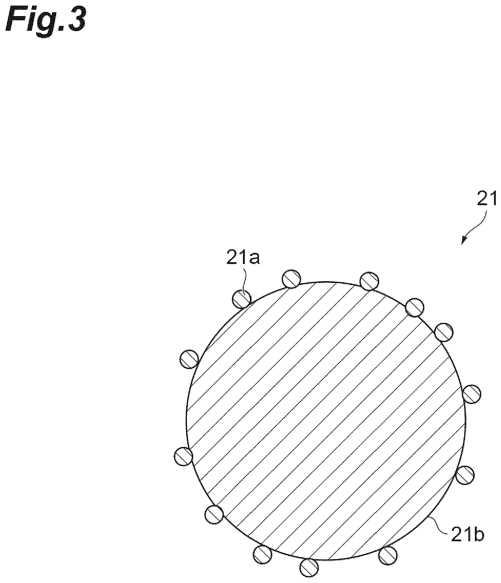

First, an embodiment of a laminate for a water electrolysis device of the present disclosure will be described with reference to FIGS. 1 and 2. FIG. 1 is a cross-sectional view showing an embodiment of the laminate for a water electrolysis device of the present disclosure, FIG. 2 is a view schematically and partially showing an example of an electrode catalyst layer of FIG. 1, and FIG. 3 is a cross-sectional view showing an example of a catalyst-containing material of FIG. 2.

As shown in FIG. 1, a laminate 100 for a water electrolysis device (hereinafter, simply referred to as "laminate") includes a polymer electrolyte membrane 10 and an electrode catalyst layer 20 provided on one surface of the polymer electrolyte membrane 10. The electrode catalyst layer 20 includes a catalyst-containing material 21, a polymer electrolyte 22, and a fibrous material 23 (see FIG. 2). In the present embodiment, the electrode catalyst layer 20 will be described as an electrode catalyst layer (cathode-side electrode catalyst layer) disposed on the cathode (reduction electrode) side.

According to the laminate 100, since the electrode catalyst layer 20 includes the catalyst-containing material 21, the polymer electrolyte 22, and the fibrous material 23, it is possible to suppress the occurrence of cracks in the electrode catalyst layer 20. Therefore, when a voltage is applied to a membrane electrode assembly having the laminate 100 in a water electrolysis device including the membrane electrode assembly, the disturbance of a potential distribution in the electrode catalyst layer 20 is suppressed, and thus it is possible to suppress a decrease in water electrolysis performance of the water electrolysis device, and improve the durability of the water electrolysis device.

Hereinafter, the polymer electrolyte membrane 10 and the electrode catalyst layer 20 will be described in more detail.

### (Polymer Electrolyte Membrane)

The polymer electrolyte membrane 10 is made of a proton-conducting polymer material. As a specific example of such a polymer electrolyte membrane 10, a fluorine-based polymer electrolyte membrane or a hydrocarbon-based polymer electrolyte membrane can be used. As the fluorine-based polymer electrolyte membrane, for example, Nafion (registered trademark) manufactured by DuPont de Nemours, Inc., Flemion (registered trademark) manufactured by Asahi Glass Co., Ltd., Aciplex (registered trademark) manufactured by Asahi Kasei Corporation, Gore Select (registered trademark) manufactured by W. L. Gore & Associates, Inc., or the like can be used. As the hydrocarbon-based polymer electrolyte membrane, for example, a polymer electrolyte membrane such as sulfonated polyether ketone, sulfonated polyether sulfone, sulfonated polyether ether sulfone, sulfonated polysulfide, or sulfonated polyphenylene can be used.

The thickness of the polymer electrolyte membrane 10 is not particularly limited, and is usually 20 to 250 µm, and preferably 20 to 80 µm. In a case where the thickness of the polymer electrolyte membrane 10 is within the above range, the mechanical durability of the polymer electrolyte membrane 10 can be maintained, and the proton resistance can be reduced to increase the electrolysis performance. That is, in a case where the thickness of the polymer electrolyte membrane 10 is within the above range, both the mechanical durability and the high proton conductivity of the polymer electrolyte membrane 10 can be achieved, and the water electrolysis performance of a water electrolysis device can be increased.

### (Electrode Catalyst Layer)

The electrode catalyst layer 20 is an electrode catalyst layer disposed on the cathode side. The electrode catalyst layer 20 includes the catalyst-containing material 21, the polymer electrolyte 22, and the fibrous material 23.

### (1) Catalyst-Containing Material

The catalyst-containing material 21 contains a catalyst (hereinafter, also referred to as "cathode catalyst") that carries out a reduction reaction by proton. As such a cathode catalyst, metals included in the platinum group, metals other than the platinum group, alloys, oxides, or double oxides of these metals, or the like can be used. Examples of the metals included in the platinum group include platinum, palladium, ruthenium, iridium, rhodium, and osmium. Examples of the metals other than the platinum group include iron, lead, copper, chromium, cobalt, nickel, manganese, vanadium, molybdenum, gallium, and aluminum. The double oxide mentioned here refers to an oxide containing two kinds of metals.

The cathode catalyst is preferably formed of a metal included in the platinum group. In a case where one or more metals selected from platinum, gold, palladium, rhodium, ruthenium, and iridium are used, they are excellent in electrode reactivity due to high activity, and thus can efficiently and stably carry out the electrode reaction.

The catalyst is usually particulate. The average particle size of the particulate catalyst is preferably 20 nm or less, and more preferably 5 nm or less. In this case, the activity of the catalyst is further improved. From the viewpoint of the stability of the activity of the catalyst, the average particle size of the particulate catalyst is preferably 0.5 nm or more, and more preferably 1 nm or more.

As shown in FIG. 3, the catalyst-containing material 21 may further contain, in addition to a catalyst 21a, a conductive carrier 21b carrying the catalyst 21a. That is, the catalyst-containing material 21 may consist of catalyst-carrying particles. The carrier 21b may be a conductive material capable of carrying the catalyst 21a without being eroded by the catalyst 21a. As such a carrier 21b, carbon particles can be preferably used due to their high electron conductivity.

The carbon particles are not limited as long as they are particulate and conductive, and are not eroded by the catalyst 21a. As the carbon particles, for example, carbon black, graphite, graphite, activated carbon, carbon fiber, carbon nanotube, or fullerene can be used. The carbon black is at least one selected from the group consisting of acetylene black, furnace black, and Ketjen black.

The average particle size of the carbon particles is preferably 10 nm or more. In this case, an electron conductive path is easily formed in the electrode catalyst layer 20. In addition, the average particle size of the carbon particles is preferably within a range of 1,000 nm or less, and more preferably within a range of 100 nm or less from the viewpoint of decreasing the resistance value of the electrode catalyst layer 20 and increasing the amount of the catalyst carried. Here, the average particle size is an arithmetic average value of particle sizes of at least 20 carbon particles observed with a scanning electron microscope (SEM). The particle size refers to a diameter when a carbon particle is approximated as a circle, and the particle size is obtained by calculating a diameter when the cross-sectional area of a carbon particle is assumed to be the area of a circle.

The carrier 21b may be covered with a hydrophobic coating. The hydrophobic coating imparts hydrophobicity to the carrier 21b, and has gas permeability that allows permeation of hydrogen gas. From the viewpoint of improving gas permeability, the thickness of the hydrophobic coating is preferably 40 nm or less. From the viewpoint of improving the drainage of excess water, the thickness of the hydrophobic coating is preferably 2 nm or more.

Examples of the constituent material of the hydrophobic coating include a fluorine-based compound having at least one polar group. The polar group is formed of, for example, at least one selected from the group consisting of a hydroxyl group, an alkoxy group, a carboxyl group, an ester group, an ether group, a carbonate group, and an amide group. The hydrophobic coating having a polar group is easily fixed to the outermost surface of the carrier 21b. Examples of a part other than the polar group in the fluorine-based compound include a fluoroalkyl skeleton.

### (2) Polymer Electrolyte

A proton-conducting polymer electrolyte can be used as the polymer electrolyte 22. As a specific example of the polymer electrolyte 22, for example, a fluorine-based polymer electrolyte or a hydrocarbon-based polymer electrolyte can be used. As the fluorine-based polymer electrolyte, for example, a Nafion (registered trademark)-based material manufactured by DuPont de Nemours, Inc. can be used. As the hydrocarbon-based polymer electrolyte, for example, an electrolyte such as sulfonated polyether ketone, sulfonated polyether sulfone, sulfonated polyether ether sulfone, sulfonated polysulfide, or sulfonated polyphenylene can be used. The polymer electrolyte 22 may be formed of the same polymer electrolyte as the polymer electrolyte membrane 10, or may be formed of a polymer electrolyte different from the polymer electrolyte membrane 10. However, in consideration of a dimensional change rate of the polymer electrolyte membrane 10 and the electrode catalyst layer 20 in a case where the interface resistance at an interface between the polymer electrolyte membrane 10 and the electrode catalyst layer 20 or the humidity changes, the polymer electrolyte contained in the polymer electrolyte membrane 10 and the polymer electrolyte 22 contained in electrode catalyst layer 20 are preferably the same electrolytes or polymer electrolytes with similar thermal expansion coefficients.

For example, in a case where the adhesion between the electrode catalyst layer 20 and the polymer electrolyte membrane 10 is increased, if the constituent material of the polymer electrolyte 22 is a fluorine-based polymer electrolyte, the constituent material of the polymer electrolyte membrane 10 is also preferably a fluorine-based polymer electrolyte. In addition, in a case where the constituent material of the polymer electrolyte 22 is a hydrocarbon-based polymer electrolyte, the constituent material of the polymer electrolyte membrane 10 is also preferably a hydrocarbon-based polymer electrolyte.

### (3) Fibrous Material

The fibrous material 23 may be a material that is not eroded by the catalyst 21a and the polymer electrolyte 22, and preferably consists of carbon fibers, polymer fibers, or a mixture thereof. Due to the fibrous material 23, cracks are less likely to occur in the electrode catalyst layer 20, and the durability of the electrode catalyst layer 20 increases.

The fibrous material 23 may include a Lewis acidic or Lewis basic functional group in the molecular structure of the material. Therefore, the polymer electrolyte 22 is more likely to be present around the fibrous material 23. Examples of the fibrous material 23 having a Lewis acidic functional group include carbon fibers, and polymer fibers having a hydroxyl group, a carbonyl group, a sulfonic acid group, or a phosphorous acid group. Examples of the fibrous material 23 having a Lewis basic functional group include polymer fibers having an imide structure or an azole structure. To the Lewis acidic functional group in the fibrous material 23, a proton-conducting site such as a sulfonyl group contained in the polymer electrolyte 22 is hydrogen-bonded, and thus the polymer electrolyte 22 is likely to be present around the fibrous material 23. Meanwhile, in a case where a basic functional group is included in the fibrous material 23, an acidic proton-conducting site such as a sulfonyl group contained in the polymer electrolyte 22 is bonded by an acid base, and thus the polymer electrolyte 22 is likely to be present around the fibrous material 23. Since the bonding force is stronger in the bonding by an acid base than in the hydrogen bonding, the fibrous material 23 preferably includes a Lewis basic functional group. Among them, the fibrous material 23 suitably has an azole structure. The azole structure is a five-membered heterocyclic structure including one or more nitrogen atoms, and is, for example, an imidazole structure or an oxazole structure. The material including a nitrogen atom suitably has a benzazole structure such as a benzimidazole structure or a benzoxazole structure. Specific examples of the material including a nitrogen atom include polymers such as polybenzimidazole and polybenzoxazole.

The shape of the fibrous material 23 is not particularly limited, and may have, for example, a hollow structure or a solid structure. The fibrous material 23 included in the electrode catalyst layer 20 may include one or a combination of two or more of the above examples.

The average fiber diameter of the fibrous material 23 is not particularly limited, and is preferably 100 nm or more and 1 µm or less, and more preferably 5 µm or more and 50 µm or less. In this case, the occurrence of cracks in the electrode catalyst layer 20 is further suppressed. In addition, the adhesion between the polymer electrolyte membrane 10 and the electrode catalyst layer 20 can be improved. Therefore, it is possible to suppress the generation of a void due to peeling between the polymer electrolyte membrane 10 and the electrode catalyst layer 20, and thus it is possible to further suppress an increase in resistance of the membrane electrode assembly due to the void. Due to the above-described reasons, according to the membrane electrode assembly, it is possible to further suppress a decrease in water electrolysis performance.

The average fiber diameter of the fibrous material 23 refers to an average value of diameters measured with respect to cross sections of the fibrous materials 23 exposed during the observation of a cross section of the electrode catalyst layer 20 using a scanning electron microscope (SEM). In a case where the fibrous material 23 is cut obliquely with respect to the major axis thereof, an elliptical cross section is obtained. In that case, the diameter refers to a diameter of a perfect circle fitted along the minor axis of the ellipse. In a case where the cross section of the electrode catalyst layer 20 is observed using a SEM, not the cross section of the fibrous material 23, but the surface of the fibrous material 23 may be exposed. In that case, the diameter refers to a width of the fiber orthogonal to the major axis of the exposed fibrous material 23. The average fiber diameter of the fibrous material 23 refers to an arithmetic average value of fiber diameters obtained by performing the measurement in the same manner at at least 20 observation points.

The average fiber diameter of the fibrous material 23 may be 10 nm or more and 1 µm or less, or may be 100 nm or more and 200 nm or less. In a case where the average fiber diameter of the fibrous material 23 is within the above range, the occurrence of cracks in the electrode catalyst layer 20 is further suppressed. In addition, the adhesion between the polymer electrolyte membrane 10 and the electrode catalyst layer 20 can be improved. Therefore, it is possible to suppress the generation of a void due to peeling between the polymer electrolyte membrane 10 and the electrode catalyst layer 20, and thus it is possible to further suppress an increase in resistance of the membrane electrode assembly due to the void. Due to the above-described reasons, in the laminate 100 and the membrane electrode assembly having the laminate 100, it is possible to further suppress a decrease in water electrolysis performance.

As a method of exposing the cross section of the electrode catalyst layer 20, for example, a known method such as ion milling or ultramicrotome can be used.

The average fiber length of the fibrous material 23 is not particularly limited, and is preferably 500 nm or more, and more preferably 1 µm or more. In this case, the fibrous material 23 is entangled, holes having an appropriate size are formed in the electrode catalyst layer 20, and the mechanical characteristics of the electrode catalyst layer 20 can be improved. However, the average fiber length of the fibrous material 23 is preferably 100 µm or less, and more preferably 40 µm or less.

The average fiber length of the fibrous material 23 refers to an arithmetic average value of fiber lengths obtained by measuring lengths of at least ten fibrous materials 23. The average fiber length of the fibrous material 23 in the electrode catalyst layer 20 can be obtained by measuring a particle size distribution using a solution in which the electrode catalyst layer 20 is dissolved in a solvent. Specifically, a correlation between an average fiber length obtained by an electron microscope and a peak position in the measurement of the particle size distribution is grasped in advance, and based on the correlation and the peak position obtained by the measurement of the particle size distribution, the average fiber length of the fibrous material 23 in the electrode catalyst layer 20 is obtained.

The fibrous material 23 may be a material having a property of adsorbing the polymer electrolyte 22 or a material having no property of adsorbing the polymer electrolyte 22, and is preferably a material having a property of adsorbing the polymer electrolyte 22. In this case, the occurrence of cracks in the electrode catalyst layer 20 is further suppressed since the fibrous material 23 is a material that is adsorbed to the polymer electrolyte 22.

The "material having a property of adsorbing a polymer electrolyte" refers to a material capable of adsorbing 10 mg or more of the polymer electrolyte per 1 g of the fibrous material.

In a case where the fibrous material 23 consists of carbon fibers, examples of the carbon fibers include carbon fibers, carbon nanotubes, and carbon nanohorns. In particular, carbon nanofibers or carbon nanotubes are suitable from the viewpoint of a conductive property and dispersibility.

The average fiber diameter of the carbon fibers is preferably 300 nm or less, and more preferably 200 nm or less. In a case where the average fiber diameter of the carbon fibers is 300 nm or less, the carbon fibers ensure appropriate thinness as a fiber material contained in the electrode catalyst layer 20.

The average fiber diameter of the carbon fibers is preferably 50 nm or more, and more preferably 100 nm or more. In this case, since the carbon fibers ensure an appropriate thickness, the strength of the electrode catalyst layer 20 further increases, and thus the occurrence of cracks is further suppressed.

The average fiber length of the carbon fibers is preferably within a range of 1.0 µm or more and 20 µm or less. In a case where the average fiber length of the carbon fibers is within the above numerical value range, holes having an appropriate size can be formed in the electrode catalyst layer 20 by entanglement of the fibrous material 23. Due to the capillary force of the holes, both the supply of a reactive material and the dissipation of a produced material can be achieved, and thus the water electrolysis performance in a water electrolysis device can be increased. In addition, in a case where the average fiber length of the carbon fibers is within the above numerical value range, the strength of the electrode catalyst layer 20 can be improved. In particular, in a case where the average fiber diameter of the carbon fibers is within a range of 100 nm or more and 300 nm or less, the average fiber length of the carbon fibers is preferably within a range of 1.0 µm or more and 20 µm or less. In this case, since the structure in which the fibrous material 23 is entangled is suitably formed in the electrode catalyst layer 20, the strength of the electrode catalyst layer 20 further increases, and thus it is possible to further suppress the occurrence of cracks.

The blending amount of the carbon fibers is preferably 10 parts by mass or more and 200 parts by mass or less, and more preferably 20 parts by mass or more and 100 parts by mass or less relative to 100 parts by mass of the catalyst. In this case, since the structure in which the carbon fibers are entangled is suitably formed, the strength of the electrode catalyst layer 20 further increases, and thus it is possible to further suppress the occurrence of cracks.

In a case where the catalyst-containing material 21 contains the carrier 21b, the blending amount of the carbon fibers may be within a range of 30 parts by mass or more and 150 parts by mass or less with the carrier 21b in the catalyst-containing material 21 as a reference (100 parts by mass). In this case, since the structure in which the carbon fibers are entangled is suitably formed in the electrode catalyst layer 20, the strength of the electrode catalyst layer 20 further increases, and thus it is possible to further suppress the occurrence of cracks.

In particular, the blending amount of the carbon fibers is preferably within a range of 5 parts by mass or more and 50 parts by mass or less relative to 100 parts by mass of the conductive carrier 21b. By adjusting the blending amount of the carbon fibers to within the above range, the structure in which the carbon fibers are entangled is suitably formed, and thus the strength of the electrode catalyst layer 20 further increases. As a result, cracks are less likely to occur and the carbon fibers act to favorably assist the electron conductivity in the electrode catalyst layer 20, so that good electrolysis performance is obtained. As the conductive carrier 1b, carbon particles are preferable since they have good electron conductivity and can be obtained at low cost.

In a case where the fibrous material 23 consists of polymer fibers, ionomer adsorbing fibers, conductive polymer nanofibers, proton-conducting polymer fibers, or the like are used as the polymer fibers.

As the polymer fibers, polymer fibers having a cation exchange group can be used as ionomer adsorbing fibers. Examples of the cation exchange group include a hydroxyl group, a carbonyl group, a sulfonic acid group, a phosphorous acid group, and an amino group.

As the polymer fibers, proton-conducting polymer fibers can be used. In this case, a proton conductive path is formed in the polymer fibers, the proton conductivity in the electrode catalyst layer 20 is improved, and high electrolysis performance can be imparted to a water electrolysis device. That is, in the electrode catalyst layer 20, the proton conductivity increases due to the formation of a linear proton-conducting network, and it is possible to suppress a voltage loss during water electrolysis in a water electrolysis device.

The proton-conducting polymer fibers may be polymer fibers obtained by processing a proton-conducting polymer into a fibrous shape. As a material for forming the proton-conducting polymer fibers, a fluorine-based polymer electrolyte, a hydrocarbon-based polymer electrolyte, or the like can be used.

The polymer fibers are preferably ionomer adsorbing fibers, and the polymer electrolyte is preferably an ionomer. Here, the ionomer adsorbing fibers are a fibrous material having a property of adsorbing an ionomer as a polymer electrolyte. In this case, the strength of the electrode catalyst layer 20 increases, and high water electrolysis performance is obtained in a water electrolysis device including a membrane electrode assembly having the laminate 100. The reason for this is thought to be as follows.

That is, the strength of the electrode catalyst layer 20 increases by entanglement of the ionomer adsorbing fibers. In particular, since the ionomer can be strongly adsorbed to surfaces of the ionomer adsorbing fibers, the strength of the electrode catalyst layer 20 further increases. In addition, since a proton conductive path is formed by the ionomer, high water electrolysis performance is obtained.

In particular, in a case where the ionomer adsorbing fibers are polymer fibers having a cation exchange group, the proton conductivity increases due to a linear proton-conducting network formed on the polymer fibers. In addition, in a case where the polymer fibers have a cation exchange group, the cation exchange group is ionically bonded to the polymer electrolyte and can strongly adsorb the polymer electrolyte, and thus the adhesion between the polymer fibers and the polymer electrolyte can be further increased.

In a case where the polymer fibers are ionomer adsorbing fibers and the polymer electrolyte is an ionomer, the amount of the ionomer adsorbed to the ionomer adsorbing fibers is 10 mg or more per 1 g of the ionomer adsorbing fibers, and is preferably 200 mg or more, and more preferably 500 mg or more per 1 g of the ionomer adsorbing fibers. However, the amount of the ionomer adsorbed to the ionomer adsorbing fibers is preferably 4,000 mg or less, and more preferably 2,000 mg or less per 1 g of the ionomer adsorbing fibers.

For the amount of the ionomer adsorbed to the ionomer adsorbing fibers, the ionomer adsorbing fibers are brought into contact with a dispersion in which an ionomer is dispersed with a predetermined concentration C1, the dispersion is filtered through a predetermined filter (for example, 0.3 to 0.5 µm in pore diameter), a concentration C2 of the ionomer contained in the filtrate is measured, and the amount of the ionomer adsorbed to the ionomer adsorbing fibers can be calculated based on the value of C2 - C1.

The average fiber diameter of the polymer fibers is preferably 500 nm or less, and more preferably 400 nm or less. In a case where the average fiber diameter of the polymer fibers is 500 nm or less, the polymer fibers ensure appropriate thinness as a fiber material contained in the electrode catalyst layer 20.

In addition, the average fiber diameter of the polymer fibers is preferably 100 nm or more. In this case, since the polymer fibers ensure an appropriate thickness, the strength of the electrode catalyst layer 20 further increases, and thus the occurrence of cracks is further suppressed.

In addition, in a case where the fibrous material 7 consists of polymer fibers, the average fiber length of the polymer fibers is preferably within a range of 1.0 µm or more and 40 µm or less. In a case where the average fiber length of the polymer fibers is within the above numerical value range, holes having a suitable size can be formed in the cathode electrode catalyst layer. In particular, in a case where the average fiber diameter of the polymer fibers is within a range of 100 nm or more and 500 nm or less, the average fiber length of the polymer fibers is preferably within a range of 1.0 µm or more and 40 µm or less. In this case, since the structure in which the fibrous material 23 is entangled is suitably formed in the electrode catalyst layer 20, the strength of the electrode catalyst layer 20 further increases, and thus it is possible to further suppress the occurrence of cracks.

The blending amount of the polymer fibers is preferably 1 part by mass or more and 20 parts by mass or less, and more preferably 2 parts by mass or more and 10 parts by mass or less relative to 100 parts by mass of the catalyst. In this case, since the structure in which the polymer fibers are entangled is suitably formed, the strength of the electrode catalyst layer 20 further increases, and thus it is possible to further suppress the occurrence of cracks.

In a case where the catalyst-containing material 21 contains the carrier 21b, the blending amount of the polymer fibers may be within a range of 5 parts by mass or more and 30 parts by mass or less with the carrier 21b in the catalyst-containing material 21 as a reference (100 parts by mass). That is, in a case where the catalyst-containing material 21 contains the catalyst 21a and the conductive carrier 21b, the blending amount of the polymer fibers may be within a range of 5 parts by mass or more and 30 parts by mass or less relative to 100 parts by mass of the conductive carrier 21b. In this case, since the structure in which the carbon fibers are entangled is suitably formed in the electrode catalyst layer 20, the strength of the electrode catalyst layer 20 further increases, and thus it is possible to further suppress the occurrence of cracks.

In particular, the blending amount of the polymer fibers is preferably within a range of 5 parts by mass or more and 20 parts by mass or less relative to 100 parts by mass of the conductive carrier 21b. By adjusting the blending amount of the polymer fibers to within the above range, the structure in which the polymer fibers are entangled is suitably formed, and thus the strength of the electrode catalyst layer 20 further increases. As a result, cracks are less likely to occur and the polymer fibers act to favorably assist the electron conductivity in the electrode catalyst layer 20, so that good electrolysis performance is obtained. As the conductive carrier 1b, carbon particles are preferable since they have good electron conductivity and can be obtained at low cost.

As the polymer fibers, polymer fibers having a cation exchange group can be used as ionomer adsorbing fibers. In this case, the proton conductivity increases due to a linear proton-conducting network formed on the polymer fibers. In addition, in a case where the polymer fibers have a cation exchange group, the cation exchange group is ionically bonded to the polymer electrolyte and can strongly adsorb the polymer electrolyte, and thus the adhesion between the polymer fibers and the polymer electrolyte can be further increased.

Examples of the cation exchange group include a hydroxyl group, a carbonyl group, a sulfonic acid group, a phosphorous acid group, and an amino group.

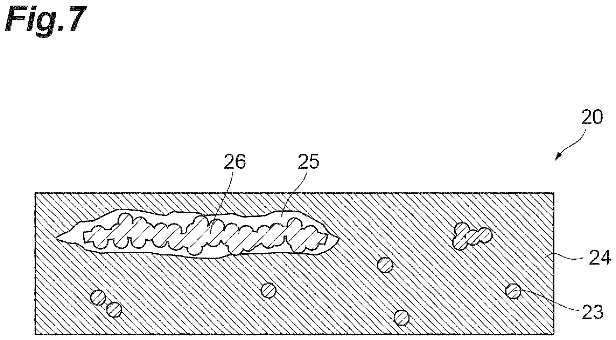

As shown in FIG. 7, the electrode catalyst layer 20 may include a polymer fiber aggregate 26 obtained by entanglement of the polymer fibers as the fibrous material 23. In addition, the electrode catalyst layer 20 may further include a void 25 surrounding the aggregate 26. In FIG. 7, the reference sign 24 denotes the catalyst-containing material 21 and the polymer electrolyte 22.

In this case, in a case where the average fiber length of the polymer fibers is more than 20 µm, the size of the void 25 surrounding the aggregate 26 is preferably 20 µm or less.

In this case, since the void 25 in the electrode catalyst layer 20 is small, it is possible to further sufficiently suppress the occurrence of cracks in the electrode catalyst layer 20, and thus a decrease in water electrolysis performance is suppressed. The reason why the decrease in water electrolysis performance is suppressed is thought to be as follows. That is, it is thought that, in a case where the void 25 has a size of 20 µm or less, the void 25 is less likely to be formed along the interface between electrode catalyst layer 20 and polymer electrolyte membrane 10 due to the aggregate 26, the electron or proton conduction is less likely to be inhibited, and the presence of little catalyst in the vicinity of the aggregate 26 is prevented, so that a part that cannot contribute to the water splitting reaction is less likely to be generated.

The size of the void 25 surrounding the aggregate 26 is more preferably 10 µm or less, and particularly preferably 5 µm or less. The size of the void 25 is preferably 0 µm, but may be larger than the average fiber diameter of the polymer fibers constituting the aggregate.

In addition, in a case where the average fiber length of the polymer fibers is 20 µm or less, the size of the void 25 surrounding the aggregate 26 is preferably equal to or less than the average fiber length of the polymer fibers. In this case, since the void 25 in the electrode catalyst layer 20 is small, it is possible to further sufficiently suppress the occurrence of cracks in the electrode catalyst layer 20, and as a result, a decrease in water splitting performance is suppressed.

The size of the void 25 surrounding the aggregate 26 is more preferably 0.5 times or less the average fiber length of the polymer fibers, and particularly preferably 0.25 times or less the average fiber length of the polymer fibers. The size of the void 25 is preferably 0 times the average fiber length of the polymer fibers.

Here, the size of the void 25 refers to an average value of maximum sizes of the voids 25 observed in three cross sections of the electrode catalyst layer 20 in a thickness direction. The size of the void 25 is a linear distance connecting one end of the void 25 and the other end farthest from the one end.

### <Method of Producing Laminate for Water Electrolysis Device>

A method of producing the laminate 100 includes a catalyst ink preparation step of preparing a catalyst ink, and an electrode catalyst layer formation step of applying the catalyst ink to one surface of the polymer electrolyte membrane 10 to form the electrode catalyst layer 20.

### <Catalyst Ink Preparation Step (Electrode Catalyst Layer Forming Composition Preparation Step)>

In the catalyst ink preparation step, the components constituting the electrode catalyst layer 20, that is, the catalyst-containing material 21, the polymer electrolyte 22, and the fibrous material 23 are mixed using a dispersion medium to prepare a catalyst ink.

The dispersion medium of the catalyst ink is not particularly limited as long as it can dissolve the polymer electrolyte 22 in a high fluidity state or disperse the polymer electrolyte 22 as a fine gel without eroding the components constituting the electrode catalyst layer 20. However, the dispersion medium desirably contains at least a volatile organic solvent. As the dispersion medium of the catalyst ink, water, alcohols, ketones, polar solvents other than the water, alcohols, and ketones, ether-based solvents, or the like may be used. Specific examples of the alcohols include methanol, ethanol, 1-propanol, 2-propanol, 1-butanol, 2-butanol, isobutyl alcohol, and tert-butyl alcohol. Examples of the ketones include acetone, methyl ethyl ketone, methyl butyl ketone, methyl isobutyl ketone, methyl amyl ketone, pentanone, heptanone, cyclohexanone, methylcyclohexanone, acetonylacetone, diethyl ketone, dipropyl ketone, and diisobutyl ketone. Examples of the polar solvents other than the water, alcohols, and ketones include dimethylformamide, dimethylacetamide, N-methylpyrrolidone, ethylene glycol, diethylene glycol, diacetone alcohol, and 1-methoxy-2 propanol. Examples of the ether-based solvents include tetrahydrofuran, dioxane, diethylene glycol dimethyl ether, anisole, methoxytoluene, and dibutyl ether. In addition, the dispersion medium may be a mixed solvent obtained by mixing two or more kinds of the above-described solvents.

In addition, in a case where a lower alcohol is used as the dispersion medium, a mixed solvent of the lower alcohol and water is preferably used from the viewpoint of further suppressing ignition of the dispersion medium. Furthermore, in a case where the polymer electrolyte 22 is an ionomer, the dispersion medium preferably includes water that is compatible with the ionomer, that is, water having high affinity for the ionomer. The water content of the dispersion medium is not particularly limited as long as the ionomer does not separate and cause cloudiness or does not gelate.

In a case where the catalyst-containing material 21 has the carrier 21b carrying the catalyst 21a, a dispersant may be contained in the catalyst ink to disperse the catalyst-containing material 21 in the catalyst ink. Examples of the dispersant include an anionic surfactant, a cationic surfactant, an amphoteric surfactant, and a nonionic surfactant.

The solid content in the catalyst ink is preferably 50 mass% or less. In this case, the occurrence of cracks in the surface of the electrode catalyst layer 20 is further suppressed. The solid content in the catalyst ink is more preferably 1 mass% or more from the viewpoint of improving the rate of formation of the electrode catalyst layer 20.

In the catalyst ink preparation step, after the components constituting the electrode catalyst layer 20 are mixed using a dispersion medium, the mixture may be subjected to a dispersion treatment as necessary. In addition, in the step of preparing a catalyst ink containing polymer fibers, after the polymer fibers are dispersed in the dispersion medium in advance, the dispersion may be mixed with other materials and may be subjected to a dispersion treatment as necessary. The dispersion treatment is not particularly limited as long as it is a treatment in which the components included in the electrode catalyst layer 20 can be dispersed. Examples of such a treatment include a treatment with a planetary ball mill and a roll mill, a treatment with a shearing mill, a treatment with a wet mill, an ultrasonic dispersion treatment, and a treatment with a homogenizer.

### <Electrode Catalyst Layer Formation Step>

In the electrode catalyst layer formation step, for example, the catalyst ink obtained in the catalyst ink preparation step is applied to one surface of the polymer electrolyte membrane 10, and then subjected to a drying treatment for volatilizing the dispersion medium to form the electrode catalyst layer 20, and the laminate 100 is obtained.

In this case, the electrode catalyst layer 20 is directly formed on the surface of the polymer electrolyte membrane 10. Therefore, the adhesion between the polymer electrolyte membrane 10 and the electrode catalyst layer 20 increases. In addition, since no pressure is required to join the electrode catalyst layer 20, the crushing of the electrode catalyst layer 20 is also suppressed.

In general, the polymer electrolyte membrane 10 exhibits a high degree of swelling and a high degree of shrinkage. Therefore, in a case where the catalyst ink is applied on the polymer electrolyte membrane 10, the volume change of the polymer electrolyte membrane 10 is larger than in a case where the electrode catalyst layer 20 is formed by applying the catalyst ink on a substrate, and then transferred to the polymer electrolyte membrane 10. Therefore, in a case where the catalyst ink does not contain the fibrous material 23, cracks are likely to occur in the electrode catalyst layer 20. On the other hand, in a case where the catalyst ink contains the fibrous material 23, even if the volume of the polymer electrolyte membrane 10 is greatly changed due to direct application of the catalyst ink on the polymer electrolyte membrane 10, the occurrence of cracks in the electrode catalyst layer 20 is suppressed since the catalyst ink includes the fibrous material 23.

The method of applying the catalyst ink is not particularly limited, and various application methods can be used. As the application method, for example, a doctor blade method, a die coating method, a curtain coating method, a dipping method, a spray coating method, a screen printing method, a roll coating method, or the like can be preferably used from the viewpoint of applying the catalyst ink with a uniform film thickness on the surface of the electrode catalyst layer 20.

The drying method used in the drying treatment is not particularly limited as long as it is a method capable of volatilizing the dispersion medium. A method using an oven, a hot plate, hot air drying, or far infrared rays, or the like can be used. The drying temperature and the drying time in the drying treatment can be appropriately selected depending on the material constituting the catalyst ink. The drying temperature of the catalyst ink may be, for example, within a range of 40°C or higher and 200°C or lower, and is preferably within a range of 40°C or higher and 120°C or lower. The drying time of the catalyst ink may be, for example, 0.5 minutes or more and 1 hour or less, and is preferably 1 minute or more and 30 minutes or less.

Instead of the formation of the electrode catalyst layer 20 by applying the catalyst ink to the surface of the polymer electrolyte membrane 10 and then performing the drying treatment for volatilizing the dispersion medium, a transfer treatment may be performed in which the catalyst ink is applied to a surface of a substrate different from the polymer electrolyte membrane 10, and then subjected to a drying treatment for volatilizing the dispersion medium to form the electrode catalyst layer 20, the electrode catalyst layer 20 is joined to the polymer electrolyte membrane 10, and then the substrate is peeled off.

The substrate may be a material having good transferability, and for example, a fluorine-based resin can be used. Examples of the fluorine-based resin include an ethylene-tetrafluoroethylene copolymer (ETFE), a tetrafluoroethylene-hexafluoropropylene copolymer (FEP), a tetrafluoro-perfluoroalkyl vinyl ether copolymer (PFA), and polytetrafluoroethylene (PTFE). In addition, as the substrate, organic polymer compounds other than the fluorine-based resins, such as polyimide, polyethylene terephthalate, polyamide (nylon (registered trademark)), polysulfone, polyethersulfone, polyphenylene sulfide, polyether ether ketone, polyetherimide, polyarylate, and polyethylene naphthalate can also be used. The substrate may be in the form of either a sheet or a film.

As the transfer treatment, for example, a transfer method using thermocompression bonding can be used.

### <Membrane Electrode Assembly for Water Electrolysis Device>

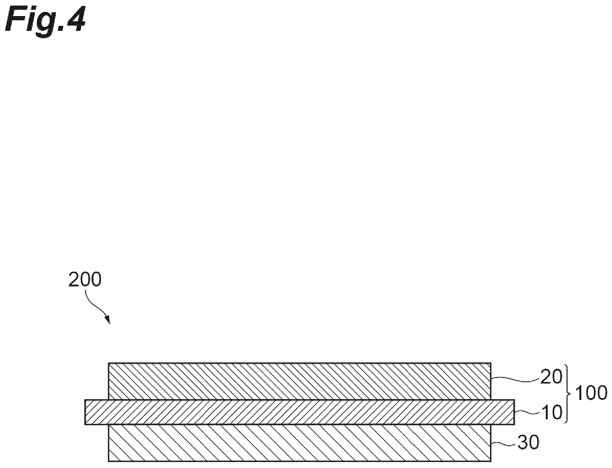

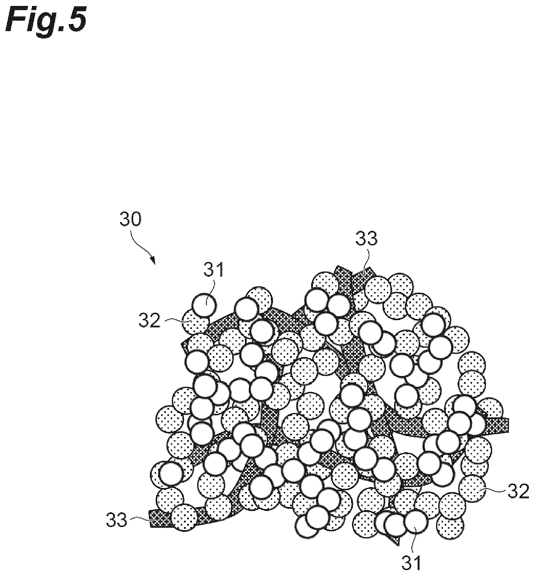

Next, a membrane electrode assembly for a water electrolysis device of the present disclosure will be described with reference to FIGS. 4 and 5. FIG. 4 is a cross-sectional view showing an embodiment of the membrane electrode assembly for a water electrolysis device of the present disclosure, and FIG. 5 is a view schematically and partially showing an example of an electrode catalyst layer provided in the laminate of FIG. 4.

As shown in FIG. 4, a membrane electrode assembly 200 for a water electrolysis device (hereinafter, simply referred to as "membrane electrode assembly") includes a laminate 100 and a second electrode catalyst layer 30. The second electrode catalyst layer 30 is provided so that a polymer electrolyte membrane 10 is sandwiched between the second electrode catalyst layer 30 and an electrode catalyst layer 20 of the laminate 100. That is, the membrane electrode assembly 200 includes the electrode catalyst layer 20, the polymer electrolyte membrane 10, and the second electrode catalyst layer 30 in this order. The electrode catalyst layer 20 includes a catalyst-containing material 21, a polymer electrolyte 22, and a fibrous material 23 (see FIG. 2), and the second electrode catalyst layer 30 includes a catalyst-containing material 31, a polymer electrolyte 32, and a fibrous material 33 (see FIG. 5). In the present embodiment, the second electrode catalyst layer 30 will be described as an electrode catalyst layer (anode-side electrode catalyst layer) disposed on the anode (oxidation electrode) side.

According to the membrane electrode assembly 200, since the electrode catalyst layer 20 includes the catalyst-containing material 21, the polymer electrolyte 22, and the fibrous material 23 and the second electrode catalyst layer 30 includes the catalyst-containing material 31, the polymer electrolyte 32, and the fibrous material 33, it is possible to suppress the occurrence of cracks in the electrode catalyst layer 20 and the second electrode catalyst layer 30. Therefore, when a voltage is applied to the membrane electrode assembly 200 in a water electrolysis device including the membrane electrode assembly 200, the disturbance of a potential distribution in the electrode catalyst layer 20 and the second electrode catalyst layer 30 is suppressed, and thus it is possible to suppress a decrease in water electrolysis performance of the water electrolysis device, and improve the durability of the water electrolysis device.

### (Second Electrode Catalyst Layer)

The second electrode catalyst layer 30 is an electrode catalyst layer disposed on the anode side, and includes the catalyst-containing material 31, the polymer electrolyte 32, and the fibrous material 33.

### (1) Catalyst-Containing Material

The catalyst-containing material 31 is a catalyst-containing material that carries out an oxidation reaction.

The catalyst-containing material 31 contains a catalyst (hereinafter, also referred to as "anode catalyst") for carrying out an oxidation reaction in an anolyte. As the anolyte, water such as ultrapure water is used. As the anode catalyst, for example, metals included in the platinum group, metals other than the platinum group, or alloys, oxides, double oxides, or carbides of these metals can be used. These can be used alone or in combination of two or more thereof. Among the above anode catalysts, ruthenium, rhodium, palladium, iridium, platinum, and alloys containing at least one of these materials are suitable due to their high catalytic activity. The double oxide refers to an oxide containing two kinds of metals.

The anode catalyst is preferably formed of a metal included in the platinum group. In a case where one or more metals selected from platinum, gold, palladium, rhodium, ruthenium, and iridium are used, they are excellent in electrode reactivity due to high activity, and thus can efficiently and stably carry out the electrode reaction.

The catalyst-containing material 31 may further contain, in addition to the catalyst, a conductive carrier carrying the catalyst. That is, the catalyst-containing material 31 may consist of catalyst-carrying particles. The carrier may be a conductive material that is not eroded under an oxidizing atmosphere (that is, resistant to loss by oxidation), and examples of such a carrier include titanium, tin, zirconium, and oxides containing two or more of the above materials.

The average particle size of the carrier is preferably 10 nm or more. In this case, an electron conductive path is easily formed. However, from the viewpoint of decreasing the resistance value of the second electrode catalyst layer 30 and increasing the carrying amount of the catalyst, the average particle size of the carrier is preferably 1,000 nm or less, and more preferably 100 nm or less. Here, the average particle size is an average particle size obtained from an SEM image, and is obtained in the same manner as in the case of the average particle size of the carbon particles as the carrier 21b.

### (2) Polymer Electrolyte and Fibrous Material

The polymer electrolyte 32 is similar to the polymer electrolyte 22 of the electrode catalyst layer 20 described above, and the fibrous material 33 is similar to the fibrous material 23 of the electrode catalyst layer 20 described above.

However, the fibrous material 33 preferably includes polymer fibers. In this case, cracks are particularly less likely to occur in the anode-side electrode catalyst layer 30, and the durability is likely to increase.

The average fiber diameter of the fibrous material 33 is preferably 500 nm or less, and more preferably 400 nm or less. In a case where the average fiber diameter of the fibrous material 33 is 500 nm or less, the fibrous material 33 ensures appropriate thinness as a fiber material contained in the anode-side electrode catalyst layer 30.

In addition, the average fiber diameter of the fibrous material 33 is preferably 100 nm or more. In this case, since the fibrous material 33 ensure an appropriate thickness, the strength of the anode-side electrode catalyst layer 30 further increases, and thus the occurrence of cracks is further suppressed.

In addition, the average fiber length of the fibrous material 33 is preferably within a range of 1.0 µm or more and 40 µm or less. In a case where the average fiber length of the fibrous material 33 is within the above numerical value range, holes having a suitable size can be formed in the anode-side electrode catalyst layer 30. In particular, in a case where the average fiber diameter of the fibrous material 33 is within a range of 100 nm or more and 500 nm or less, the average fiber length of the fibrous material 33 is preferably within a range of 1.0 µm or more and 40 µm or less. In this case, since the structure in which the fibrous material 33 is entangled is suitably formed in the anode-side electrode catalyst layer 30, the strength of the anode-side electrode catalyst layer 30 further increases, and thus it is possible to further suppress the occurrence of cracks.

The content percentage of the fibrous material 33 in the second electrode catalyst layer 30 is preferably within a range of 0.5 mass% or more and 20 mass% or less, and more preferably within a range of 5 mass% or more and 15 mass% or less. In this case, since the amount of the fibrous material 33 is suitable for being contained in the second electrode catalyst layer 30 and the structure in which the fibrous material 33 is entangled is suitably formed, the strength of the second electrode catalyst layer 30 further increases, and thus the occurrence of cracks is further suppressed.

A ratio R (DF2/DF1) of a content percentage (DF2) of the fibrous material 33 in the second electrode catalyst layer 30 to a content percentage (DF1) of the fibrous material 23 in the electrode catalyst layer 20 may be more than 1 or less than 1, and is preferably more than 1. In this case, the strength of the second electrode catalyst layer 30 further increases, and thus the deformation of the polymer electrolyte membrane 10 and the occurrence of cracks can be further suppressed when the second electrode catalyst layer 30 is formed after formation of the electrode catalyst layer 20.

In a case where the fibrous material 23 in the electrode catalyst layer 20 consists of carbon fibers, the ratio R is more preferably 5 or more and 30 or less, and still more preferably 10 or more and 20 or less. In a case where the ratio R is within the above range, the strength of the second electrode catalyst layer 30 further increases, and thus the deformation of the polymer electrolyte membrane 10 and the occurrence of cracks can be further suppressed when the second electrode catalyst layer 30 is formed after formation of the electrode catalyst layer 20.

In a case where the fibrous material 23 in the electrode catalyst layer 20 consists of polymer fibers, the ratio R is more preferably 1.1 or more and 15 or less, and still more preferably 1.5 or more and 7 or less. In a case where the ratio R is within the above range, the strength of the second electrode catalyst layer 30 further increases, and thus the deformation of the polymer electrolyte membrane 10 and the occurrence of cracks can be further suppressed when the second electrode catalyst layer 30 is formed after formation of the electrode catalyst layer 20.

In a plan view of the second electrode catalyst layer 30 from a direction opposed to one surface of the polymer electrolyte membrane 10, the shape of the second electrode catalyst layer 30 may be the same as or different from the shape of the electrode catalyst layer 20. In addition, in a plan view of the second electrode catalyst layer 30 from a direction opposed to one surface of the polymer electrolyte membrane 10, the area of the second electrode catalyst layer 30 may be smaller than or equal to or larger than the area of the polymer electrolyte membrane 10, and is usually smaller than the area of the polymer electrolyte membrane 10.

### <Method of Producing Membrane Electrode Assembly for Water Electrolysis Device>

A method of producing the membrane electrode assembly 200 includes a catalyst ink preparation step of preparing a catalyst ink, and an electrode catalyst layer formation step of applying the catalyst ink to both surfaces of the polymer electrolyte membrane 10 to form the cathode-side electrode catalyst layer 20 and the anode-side electrode catalyst layer 30. That is, the method of producing the membrane electrode assembly 200 is different from the method of producing the laminate 100 in the catalyst ink preparation step and the electrode catalyst layer formation step.

### <Catalyst Ink Preparation Step>

The catalyst ink preparation step is different from the catalyst ink preparation step of the method of producing the laminate 100 in that a catalyst ink for forming an anode-side electrode catalyst layer is further prepared by mixing the components constituting the anode-side electrode catalyst layer 30, that is, the catalyst-containing material 31, the polymer electrolyte 32, and the fibrous material 33 using a dispersion medium.

The dispersion medium of the catalyst ink is not particularly limited as long as it can dissolve the polymer electrolyte 32 in a high fluidity state or disperse the polymer electrolyte 32 as a fine gel without eroding the components constituting the anode-side electrode catalyst layer 30. However, the dispersion medium desirably contains at least a volatile organic solvent. As the dispersion medium of the catalyst ink, water, alcohols, ketones, polar solvents other than the water, alcohols, and ketones, ether-based solvents, or the like may be used. Specific examples of the alcohols include methanol, ethanol, 1-propanol, 2-propanol, 1-butanol, 2-butanol, isobutyl alcohol, and tert-butyl alcohol. Examples of the ketones include acetone, methyl ethyl ketone, methyl butyl ketone, methyl isobutyl ketone, methyl amyl ketone, pentanone, heptanone, cyclohexanone, methylcyclohexanone, acetonylacetone, diethyl ketone, dipropyl ketone, and diisobutyl ketone. Examples of the polar solvents other than the water, alcohols, and ketones include dimethylformamide, dimethylacetamide, N-methylpyrrolidone, ethylene glycol, diethylene glycol, diacetone alcohol, and 1-methoxy-2 propanol. Examples of the ether-based solvents include tetrahydrofuran, dioxane, diethylene glycol dimethyl ether, anisole, methoxytoluene, and dibutyl ether. In addition, the dispersion medium may be a mixed solvent obtained by mixing two or more kinds of the above-described solvents.

In addition, in a case where a lower alcohol is used as the dispersion medium, a mixed solvent of the lower alcohol and water is preferably used from the viewpoint of further suppressing ignition of the dispersion medium. Furthermore, in a case where the polymer electrolyte 32 is an ionomer, the dispersion medium preferably includes water that is compatible with the ionomer, that is, water having high affinity for the ionomer. The water content of the dispersion medium is not particularly limited as long as the ionomer does not separate and cause cloudiness or does not gelate.

In a case where the catalyst-containing material 31 has a carrier carrying the catalyst, a dispersant may be contained in the catalyst ink for forming an anode-side electrode catalyst layer to disperse the catalyst-containing material 31 in the catalyst ink. Examples of the dispersant include an anionic surfactant, a cationic surfactant, an amphoteric surfactant, and a nonionic surfactant.

The solid content in the catalyst ink is preferably 50 mass% or less. In this case, the occurrence of cracks in the surface of the anode-side electrode catalyst layer 30 is further suppressed. The solid content in the catalyst ink is more preferably 1 mass% or more from the viewpoint of improving the rate of formation of the anode-side electrode catalyst layer 30.

In the catalyst ink preparation step, after the components constituting the anode-side electrode catalyst layer 30 are mixed using a dispersion medium, the mixture may be subjected to a dispersion treatment as necessary. The dispersion treatment is not particularly limited as long as it is a treatment in which the components included in the anode-side electrode catalyst layer 30 can be dispersed. Examples of such a treatment include a treatment with a planetary ball mill and a roll mill, a treatment with a shearing mill, a treatment with a wet mill, an ultrasonic dispersion treatment, and a treatment with a homogenizer.

### <Electrode Catalyst Layer Formation Step>

The electrode catalyst layer formation step is different from the electrode catalyst layer formation step of the method of producing the laminate 100 in that the anode-side electrode catalyst layer 30 is formed by applying the catalyst ink for forming an anode-side electrode catalyst layer to a surface of the polymer electrolyte membrane 10 opposite to the electrode catalyst layer 20.

In the electrode catalyst layer formation step, the catalyst ink for forming an anode-side electrode catalyst layer obtained in the catalyst ink preparation step is applied to the other surface of the polymer electrolyte membrane 10, and then subjected to a drying treatment for volatilizing the dispersion medium to form the anode-side electrode catalyst layer 30, and the membrane electrode assembly 200 is obtained.

In this case, the anode-side electrode catalyst layer 30 is directly formed on the surface of the polymer electrolyte membrane 10. Therefore, the adhesion between the polymer electrolyte membrane 10 and the anode-side electrode catalyst layer 30 increases. In addition, since no pressure is required to join the anode-side electrode catalyst layer 30, the crushing of the anode-side electrode catalyst layer 30 is also suppressed.

In general, the polymer electrolyte membrane 10 exhibits a high degree of swelling and a high degree of shrinkage. Therefore, in a case where the catalyst ink is applied on the polymer electrolyte membrane 10, the volume change of the polymer electrolyte membrane 10 is larger than in a case where the anode-side electrode catalyst layer 30 is formed by applying the catalyst ink on a substrate, and then transferred to the polymer electrolyte membrane 10. Therefore, in a case where the catalyst ink does not contain the fibrous material 23, cracks are likely to occur in the anode-side electrode catalyst layer 30. On the other hand, in a case where the catalyst ink contains the fibrous material 33, even if the volume of the polymer electrolyte membrane 10 is greatly changed due to direct application of the catalyst ink on the polymer electrolyte membrane 10, the occurrence of cracks in the anode-side electrode catalyst layer 30 is suppressed since the catalyst ink includes the fibrous material 33.

The method of applying the catalyst ink is not particularly limited, and various application methods can be used. As the application method, for example, a doctor blade method, a die coating method, a curtain coating method, a dipping method, a spray coating method, a screen printing method, a roll coating method, or the like can be preferably used from the viewpoint of applying the catalyst ink with a uniform film thickness on the surface of the cathode-side electrode catalyst layer 20 or the anode-side electrode catalyst layer 30.

The drying method used in the drying treatment is not particularly limited as long as it is a method capable of volatilizing the dispersion medium. A method using an oven, a hot plate, hot air drying, or far infrared rays, or the like can be used. The drying temperature and the drying time in the drying treatment can be appropriately selected depending on the material constituting the catalyst ink. The drying temperature of the catalyst ink may be, for example, within a range of 40°C or higher and 200°C or lower, and is preferably within a range of 40°C or higher and 120°C or lower. The drying time of the catalyst ink may be, for example, 0.5 minutes or more and 1 hour or less, and is preferably 1 minute or more and 30 minutes or less.

Instead of the formation of the anode-side electrode catalyst layer 30 by applying the catalyst ink to the surface of the polymer electrolyte membrane 10 and then performing the drying treatment for volatilizing the dispersion medium, a transfer treatment may be performed in which the catalyst ink is applied to a surface of a substrate different from the polymer electrolyte membrane 10, and then subjected to a drying treatment for volatilizing the dispersion medium to form the anode-side electrode catalyst layer 30, the anode-side electrode catalyst layer 30 is joined to the polymer electrolyte membrane 10, and then the substrate is peeled off.

The substrate may be a material having good transferability, and for example, a fluorine-based resin can be used. Examples of the fluorine-based resin include an ethylene-tetrafluoroethylene copolymer (ETFE), a tetrafluoroethylene-hexafluoropropylene copolymer (FEP), a tetrafluoro-perfluoroalkyl vinyl ether copolymer (PFA), and polytetrafluoroethylene (PTFE). In addition, as the substrate, organic polymer compounds other than the fluorine-based resins, such as polyimide, polyethylene terephthalate, polyamide (nylon (registered trademark)), polysulfone, polyethersulfone, polyphenylene sulfide, polyether ether ketone, polyetherimide, polyarylate, and polyethylene naphthalate can also be used. The substrate may be in the form of either a sheet or a film.

As the transfer treatment, for example, a transfer method using thermocompression bonding can be used.

### <Water Electrolysis Device>

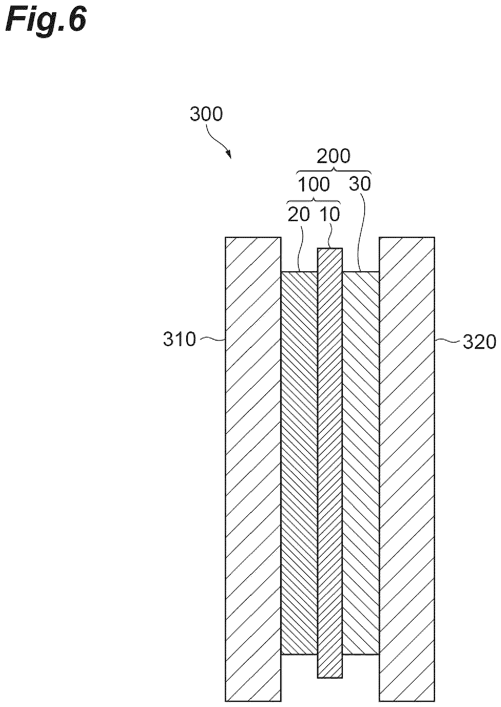

First, an embodiment of a water electrolysis device of the present disclosure will be described with reference to FIG. 6. FIG. 6 is a cross-sectional view showing an embodiment of the water electrolysis device of the present disclosure.

As shown in FIG. 6, a water electrolysis device 300 of the present embodiment includes a membrane electrode assembly 200, a pair of main electrodes 310 and 320 provided so that the membrane electrode assembly 200 is sandwiched by the main electrodes 310 and 320, and a DC power supply (not shown) electrically connected to the main electrodes 310 and 320. The main electrode 310 is a cathode, and is joined to an electrode catalyst layer 20 of the membrane electrode assembly 200. The main electrode 320 is an anode, and is joined to a second electrode catalyst layer 30 of the membrane electrode assembly 200. That is, the water electrolysis device 300 of the present embodiment includes the cathode 310, the membrane electrode assembly 200, and the anode 320 in this order.

The membrane electrode assembly 200 includes a laminate 100 and the second electrode catalyst layer 30. The second electrode catalyst layer 30 is provided so that a polymer electrolyte membrane 10 is sandwiched between the second electrode catalyst layer 30 and an electrode catalyst layer 20 of the laminate 100. That is, the membrane electrode assembly 200 includes the cathode-side electrode catalyst layer 20, the polymer electrolyte membrane 10, and the anode-side electrode catalyst layer 30 in this order, the cathode-side electrode catalyst layer 20 is disposed to be opposed to the cathode 310, and the anode-side electrode catalyst layer 30 is disposed to be opposed to the anode 320.

The water electrolysis device 300 includes the above-described membrane electrode assembly 200. Therefore, according to the water electrolysis device 300, the occurrence of cracks in the electrode catalyst layer 20 and the second electrode catalyst layer 30 is suppressed in the membrane electrode assembly 200. Therefore, when a voltage is applied between the pair of main electrodes 310 and 320 by the power supply in a state in which water is supplied to the main electrode 320 serving as an anode, the disturbance of a potential distribution in the electrode catalyst layer 20 and the second electrode catalyst layer 30 of the membrane electrode assembly 200 is suppressed, and thus it is possible to suppress a decrease in water electrolysis performance of the water electrolysis device 300, and improve the durability of the water electrolysis device 300.

Specifically, the water electrolysis device 300 includes the above-described membrane electrode assembly 200, and in the membrane electrode assembly 200, the anode-side electrode catalyst layer 30 includes the catalyst-containing material 31, the polymer electrolyte 32, and the fibrous material 33. Therefore, according to the water electrolysis device 300, it is possible to suppress the occurrence of cracks in the anode-side electrode catalyst layer 30. Therefore, when a voltage is applied to the membrane electrode assembly 200 in the water electrolysis device 300, the disturbance of a potential distribution in the anode-side electrode catalyst layer 30 is suppressed, and thus it is possible to suppress a decrease in water electrolysis performance of the water electrolysis device 300, and improve the durability of the water electrolysis device 300. In addition, in the membrane electrode assembly 200, since the cathode-side electrode catalyst layer 20 also includes the catalyst-containing material 21, the polymer electrolyte 22, and the fibrous material 23, it is possible to suppress the occurrence of cracks in the cathode-side electrode catalyst layer 20. Therefore, when a voltage is applied to the membrane electrode assembly 200 in the water electrolysis device 300, the disturbance of a potential distribution in the cathode-side electrode catalyst layer 20 is also suppressed, and thus it is also possible to suppress a decrease in water electrolysis performance of the water electrolysis device 300, and further improve the durability of the water electrolysis device 300.

The laminate for a water electrolysis device of the present disclosure is not limited to the laminate 100 of the embodiment. For example, in the laminate 100, the electrode catalyst layer 20 is provided on the polymer electrolyte membrane 10, but the second electrode catalyst layer 30 may be provided instead of the electrode catalyst layer 20.

The membrane electrode assembly for a water electrolysis device of the present disclosure is not limited to the membrane electrode assembly 200 of the embodiment. For example, in the membrane electrode assembly 200, both of the cathode-side electrode catalyst layer 20 and the anode-side electrode catalyst layer 30 include the fibrous material, but the cathode-side electrode catalyst layer 20 may not necessarily include the fibrous material.

### Examples

Hereinafter, the contents of the present disclosure will be described in greater detail with reference to examples, but the present disclosure is not limited to the following examples.

### (Example 1A)

First, a catalyst-carrying powder formed of a carbon carrier (product number "TEC61E54", manufactured by Tanaka Kikinzoku Kogyo K.K., amount of PtRu carried: 54 mass%) carrying PtRu as a catalyst, a dispersion (trade name "Nafion (registered trademark) DE2020", manufactured by FUJIFILM Wako Pure Chemical Corporation) containing Nafion (registered trademark) as a polymer electrolyte, and carbon fibers (trade name "VGCF-H", manufactured by Showa Denko K.K.) as a fibrous material were mixed in a solvent, and the mixture was subjected to a dispersion treatment with a planetary ball mill for 30 minutes to prepare a catalyst ink. As the solvent of the catalyst ink, a mixed solvent of ultrapure water and 1-propanol was used. The volume ratio between ultrapure water and 1-propanol was 1 : 1. In this case, the catalyst ink was prepared so that the solid content in the catalyst ink was 10 mass%. In addition, the blending amount of the fibrous material was 50 parts by mass relative to 100 parts by mass of the carrier. The fibrous material was confirmed to have an average fiber diameter of 150 nm and an average fiber length of 6 µm.

Meanwhile, as a polymer electrolyte membrane, a Nafion (registered trademark) membrane (trade name "N117", manufactured by DuPont de Nemours, Inc.) was prepared.

Next, the catalyst ink was applied to one main surface of the polymer electrolyte membrane by a die coating method using a slit die coater so that a total amount of Pt and Ru carried was 0.5 mg/cm² per area of the main surface. Then, a drying treatment was performed using an oven at 80°C to remove the solvent component in the catalyst ink, and a laminate of the electrode catalyst layer and the polymer electrolyte membrane was obtained.

When the laminate thus obtained was visually observed, no crack was shown in the electrode catalyst layer in Example 1A. In addition, the peeling of the electrode catalyst layer from the polymer electrolyte membrane was not shown in the laminate.

In addition, when a cross section of the laminate in a thickness direction was observed by a SEM to confirm a state of a fibrous material aggregate in the electrode catalyst layer, no void due to the aggregate was shown.

### (Example 2A)

First, an iridium oxide as a catalyst, a dispersion (trade name "Nafion (registered trademark) DE2020", manufactured by FUJIFILM Wako Pure Chemical Corporation) containing Nafion (registered trademark) as a polymer electrolyte, and polymer fibers including a nitrogen atom as a fibrous material were mixed in a solvent, and the mixture was subjected to a dispersion treatment with a planetary ball mill for 30 minutes to prepare a catalyst ink. As the solvent of the catalyst ink, a mixed solvent of ultrapure water and 1-propanol was used. The volume ratio between ultrapure water and 1-propanol was 1 : 1. In this case, the catalyst ink was prepared so that the solid content in the catalyst ink was 10 mass%. In addition, the blending amount of the fibrous material was 2 parts by mass relative to 100 parts by mass of the carrier. The fibrous material was confirmed to have an average fiber diameter of 400 nm and an average fiber length of 25 µm.

Then, a laminate of an electrode catalyst layer and an electrolyte membrane was obtained in the same manner as in Example 1A.

When the laminate thus obtained was visually observed, no crack was shown in the electrode catalyst layer in Example 2A. In addition, the peeling of the electrode catalyst layer from the polymer electrolyte membrane was not shown in the laminate.

In addition, when a cross section of the laminate in a thickness direction was observed by a SEM to confirm a state of a fibrous material aggregate in the electrode catalyst layer, no void due to the aggregate was shown.

### (Example 3A)

First, a catalyst-carrying powder formed of a carbon carrier (product number "TEC61E54", manufactured by Tanaka Kikinzoku Kogyo K.K., amount of PtRu carried: 54 mass%) carrying PtRu as a catalyst, a dispersion (trade name "Nafion (registered trademark) DE2020", manufactured by FUJIFILM Wako Pure Chemical Corporation) containing Nafion (registered trademark) as a polymer electrolyte, and polymer fibers including a nitrogen atom as a fibrous material were mixed in a solvent, and the mixture was subjected to a dispersion treatment with a high-pressure disperser for 30 minutes to prepare a catalyst ink. In this case, the polymer fibers were dispersed in a dispersion medium in advance using a high-pressure disperser. As the solvent of the catalyst ink, a mixed solvent of ultrapure water and 1-propanol was used. The volume ratio between ultrapure water and 1-propanol was 1 : 1. In this case, the catalyst ink was prepared so that the solid content in the catalyst ink was 10 mass%. In addition, the blending amount of the fibrous material was 5 parts by mass relative to 100 parts by mass of the carrier. The fibrous material was confirmed to have an average fiber diameter of 200 nm and an average fiber length of 20 µm.

Meanwhile, as a polymer electrolyte membrane, a Nafion (registered trademark) membrane (trade name "N117", manufactured by DuPont de Nemours, Inc.) was prepared.

Next, the catalyst ink was applied to one main surface of the polymer electrolyte membrane by a die coating method using a slit die coater so that a total amount of Pt and Ru carried was 0.5 mg/cm² per area of the main surface. Then, a drying treatment was performed using an oven at 80°C to remove the solvent component in the catalyst ink, and a laminate of the electrode catalyst layer and the polymer electrolyte membrane was obtained.

When the laminate thus obtained was visually observed, no crack was shown in the electrode catalyst layer in Example 3A. In addition, the peeling of the electrode catalyst layer from the polymer electrolyte membrane was not shown in the laminate.

In addition, when a cross section of the laminate in a thickness direction was observed by a SEM to confirm a state of a fibrous material aggregate in the electrode catalyst layer, no void due to the aggregate was shown.

### (Example 4A)

A laminate of an electrode catalyst layer and an electrolyte membrane was obtained in the same manner as in Example 3A, except that a high-speed stirrer was used instead of the high-pressure disperser as a device to be used for the dispersion treatment in the preparation of the catalyst ink.

When the laminate thus obtained was visually observed, no crack was shown in the electrode catalyst layer in Example 4A. In addition, the peeling of the electrode catalyst layer from the polymer electrolyte membrane was not shown in the laminate.

Meanwhile, when a cross section of the laminate in a thickness direction was observed by a SEM to confirm a state of a fibrous material aggregate in the electrode catalyst layer, it was confirmed that there were many aggregates and voids having a size of about 40 µm were generated to surround the aggregates.

### (Example 5A)

A laminate of an electrode catalyst layer and an electrolyte membrane was obtained in the same manner as in Example 3A, except that an ultrasonic disperser was used to perform the dispersion treatment in the preparation of the catalyst ink.

When the laminate thus obtained was visually observed, no crack was shown in the electrode catalyst layer in Example 5A. In addition, the peeling of the electrode catalyst layer from the polymer electrolyte membrane was not shown in the laminate.

Meanwhile, when a cross section of the laminate in a thickness direction was observed by a SEM to confirm a state of a fibrous material aggregate in the electrode catalyst layer, it was confirmed that there was an aggregate and a void having a size of 5 µm was generated to surround the aggregate.

### (Example 6A)

A laminate of an electrode catalyst layer and an electrolyte membrane was obtained in the same manner as in Example 3A, except that dispersing only a fibrous material in a dispersion medium in advance before mixing of a catalyst-carrying powder, a dispersion, and the fibrous material was not performed, but the catalyst-carrying powder, the dispersion, and the fibrous material were simultaneously mixed in a solvent and subjected to a dispersion treatment with a high-pressure disperser for 30 minutes to prepare a catalyst ink.

When the laminate thus obtained was visually observed, no crack was shown in the electrode catalyst layer in Example 6A. In addition, the peeling of the electrode catalyst layer from the polymer electrolyte membrane was not shown in the laminate.

Meanwhile, when a cross section of the laminate in a thickness direction was observed by a SEM to confirm a state of a fibrous material aggregate in the electrode catalyst layer, it was confirmed that there was an aggregate and a void having a size of about 40 µm was generated to surround the aggregate.

### (Example 7A)

A laminate of an electrode catalyst layer and an electrolyte membrane was obtained in the same manner as in Example 3A, except that a bead mill was used instead of the high-pressure disperser as a device to be used for the dispersion treatment in the preparation of the catalyst ink.

When the laminate thus obtained was visually observed, no crack was shown in the electrode catalyst layer in Example 7A. In addition, the peeling of the electrode catalyst layer from the polymer electrolyte membrane was not shown in the laminate.

Meanwhile, when a cross section of the laminate in a thickness direction was observed by a SEM to confirm a state of a fibrous material aggregate in the electrode catalyst layer, the presence of an aggregate and the deformation of the fibrous material were shown. In addition, it was confirmed that a void having a size of about 5 µm was generated to surround the aggregate.

### (Comparative Example 1A)

A laminate of an electrode catalyst layer and an electrolyte membrane was obtained in the same manner as in Example 1A, except that no fibrous material was included.

When the laminate thus obtained was visually observed, cracks occurred in the electrode catalyst layer in Comparative Example 1. In addition, partial peeling of the electrode catalyst layer from the polymer electrolyte membrane was confirmed in the laminate.

### (Example 8A)

A laminate of an electrode catalyst layer and an electrolyte membrane was obtained in the same manner as in Example 1A, except that the blending amount of the fibrous material was 5 parts by mass relative to 100 parts by mass of the carrier.

When the laminate thus obtained was visually observed, no crack was shown in the electrode catalyst layer in Example 8A.

### (Example 9A)

A laminate of an electrode catalyst layer and an electrolyte membrane was obtained in the same manner as in Example 1A, except that the blending amount of the fibrous material was 25 parts by mass relative to 100 parts by mass of the carrier.

When the laminate thus obtained was visually observed, no crack was shown in the electrode catalyst layer in Example 9A.

### (Example 10A)

A laminate of an electrode catalyst layer and an electrolyte membrane was obtained in the same manner as in Example 1A, except that the blending amount of the fibrous material was 75 parts by mass relative to 100 parts by mass of the carrier.

When the laminate thus obtained was visually observed, no crack was shown in the electrode catalyst layer in Example 10A.

### <Evaluation of Electrolysis Performance>

### (Preparation of Membrane Electrode Assembly)

First, an iridium oxide as a catalyst, a dispersion (trade name "Nafion (registered trademark) DE2020", manufactured by FUJIFILM Wako Pure Chemical Corporation) containing Nafion (registered trademark) as a polymer electrolyte, and polymer fibers including a nitrogen atom as a fibrous material were mixed in a solvent, and the mixture was subjected to a dispersion treatment with a planetary ball mill for 30 minutes to prepare a catalyst ink for forming an anode-side electrode catalyst layer. As the solvent of the catalyst ink, a mixed solvent of ultrapure water and 1-propanol was used. The volume ratio between ultrapure water and 1-propanol was 1 : 1. In this case, the catalyst ink was prepared so that the solid content in the catalyst ink was 10 mass%. In addition, the blending amount of the fibrous material was 2 parts by mass relative to 100 parts by mass of the carrier. The fibrous material was confirmed to have an average fiber diameter of 400 nm and an average fiber length of 25 µm. Further, regarding the fibrous material, the amount of the polymer electrolyte adsorbed was confirmed to be 10 mg or more per 1 g of the fibrous material.

Next, the catalyst ink for forming an anode-side electrode catalyst layer was coated on the other main surface, on which no cathode-side electrode catalyst layer was formed, of the polymer electrolyte membranes of the laminates prepared in Examples 1A and 8A to 10A and Comparative Example 1A by a die coating method using a slit die coater so that the amount of iridium oxide carried was 1.0 mg/cm² per area of the main surface. Then, the dispersion medium in the catalyst ink was removed by drying in an oven at 80°C. Thus, an anode-side electrode catalyst layer was formed on the polymer electrolyte membrane of the laminate, and a membrane electrode assembly for a water electrolysis device was obtained.

The membrane electrode assembly thus obtained was disposed between a cathode and an anode to obtain a structure, and then the structure was immersed in water to prepare a water electrolysis device.

The electrolysis performance of the water electrolysis device was evaluated. Specifically, the electrolysis performance was evaluated based on a voltage value (electrolysis voltage value) measured when a voltage was applied to the membrane electrode assembly and a current of 1 A/cm² flowed. The results are shown in Table 1. The closer the voltage is to the theoretical electrolysis voltage of water, the higher the performance is, and usually, a value higher than the theoretical electrolysis voltage is shown due to various resistance components.

From the results shown in Table 1, in Example 10A in which the blending amount of the fibrous material relative to 100 parts by mass of the carrier was 75 parts by mass, the electrolytic voltage was as high as 1.98 V. In Examples 1A, 8A, and 9A and Comparative Example 1A, a small electrolysis voltage of 1.95 V or less was obtained, and good electrolysis performance was obtained.

From the results shown in Table 1, it is thought that in a case where the blending amount of the fibrous material relative to 100 parts by mass of the carrier is 5 parts by mass or more and 50 parts by mass or less, a proton conductive path is formed by an ionomer or a void is less likely to be formed in the electrode catalyst layer, so that the resistance is less likely to occur and the water electrolysis performance is thus improved. As described above, it is found that in a case where the blending amount of the fibrous material relative to 100 parts by mass of the carrier is in a range of 5 parts by mass or more and 50 parts by mass or less in the laminate for a water electrolysis layer, good electrolysis performance can be obtained while suppressing cracks in the electrode catalyst layer.

In Examples 1A and 8A to 10A, since cracks were not shown in the electrode catalyst layer as described above, it is thought that a decrease in electrolysis performance can be suppressed and the durability of the water electrolysis device can be improved. On the other hand, in Comparative Example 1A, since cracks occurred in the electrode catalyst layer as described above, it is thought that due to severe deterioration of the electrode catalyst layer, a decrease in electrolysis performance cannot be suppressed and the durability of the water electrolysis device cannot be improved.

**[Table 1]**

| | Example 1A | Comparative Example 1A | Example 8A | Example 9A | Example 10A |
|---|---|---|---|---|---|
| Blending Amount of Fibrous Material Relative to 100 Parts by Mass of Carrier | 0.5 | 0 | 0.05 | 0.25 | 0.75 |
| Electrolysis Voltage (V@1A/cm²) | 1.95 | 1.95 | 1.91 | 1.94 | 1.98 |
| Presence or Absence of Cracks | Absence | Presence | Absence | Absence | Absence |

### <Example 1B>

### (Formation of Cathode-Side Electrode Catalyst Layer)

First, the following catalyst-containing material, dispersion containing a polymer electrolyte, and fibrous material were mixed in a dispersion medium, and the mixture was subjected to a dispersion treatment with a planetary ball mill for 30 minutes. Thus, a catalyst ink for forming a cathode-side electrode catalyst layer was prepared. In this case, the catalyst ink was prepared so that the content percentage of the solid content in the catalyst ink was 10 mass%. The blending amount of the fibrous material was 1.0 times the mass of the carrier in the catalyst-containing material, and the blending amount of the polymer electrolyte was 0.8 times the mass of the carrier in the catalyst-containing material. In addition, the fibrous material was confirmed to have an average fiber diameter of 150 nm and an average fiber length of 15 µm. Further, regarding the fibrous material, the amount of the polymer electrolyte adsorbed was confirmed to be 10 mg or more per 1 g of the fibrous material.
·Catalyst-containing material: catalyst-carrying particles formed of a carbon carrier (product number "TEC61E54", manufactured by Tanaka Kikinzoku Kogyo K.K., amount of PtRu carried: 54 mass%) carrying PtRu
·Dispersion containing polymer electrolyte (ionomer): a dispersion (trade name "Nafion (registered trademark) DE2020", manufactured by FUJIFILM Wako Pure Chemical Corporation) containing Nafion (registered trademark) as a fluorine-based polymer electrolyte
·Fibrous material: carbon fibers (trade name "VGCF-H", manufactured by Showa Denko K.K.)
·Dispersion medium: a mixed solvent of ultrapure water and 1-propanol (water : 1-propanol = 1 : 1 (volume ratio))

Next, the catalyst ink for forming a cathode-side electrode catalyst layer was applied to one main surface of a Nafion (registered trademark) membrane (trade name "N117", manufactured by DuPont de Nemours, Inc.) as a polymer electrolyte membrane by a die coating method using a slit die coater so that a total amount of Pt and Ru carried was 0.5 mg/cm² per area of the main surface. Then, the solvent component in the catalyst ink was removed by drying in an oven at 80°C, and a laminate of the electrode catalyst layer and the polymer electrolyte membrane was obtained.

### (Formation of Anode-Side Electrode Catalyst Layer)

On the other hand, the following catalyst, dispersion containing a polymer electrolyte, and fibrous material were mixed in a dispersion medium, and the mixture was subjected to a dispersion treatment with a planetary ball mill for 30 minutes. Thus, a catalyst ink for forming an anode-side electrode catalyst layer was prepared. In this case, the catalyst ink was prepared so that the content percentage of the solid content in the catalyst ink was 10 mass%. The blending amount of the fibrous material was 0.01 times the mass of the anode-side electrode catalyst layer, and the blending amount of the polymer electrolyte was 0.2 times the mass of the catalyst. In addition, the fibrous material was confirmed to have an average fiber diameter of 200 nm and an average fiber length of 25 µm. Further, regarding the fibrous material, the amount of the polymer electrolyte adsorbed was confirmed to be 10 mg or more per 1 g of the fibrous material.
·Catalyst: an iridium oxide powder
·Dispersion containing polymer electrolyte (ionomer): a dispersion (trade name "Nafion (registered trademark) DE2020", manufactured by FUJIFILM Wako Pure Chemical Corporation) containing Nafion (registered trademark) as a fluorine-based polymer electrolyte
·Fibrous material (ionomer adsorbing fibers): polymer fibers (cation exchange group: sulfonic acid group)
·Dispersion medium: a mixed solvent of ultrapure water and 1-propanol (water : 1-propanol = 1 : 1 (volume ratio))

Next, the catalyst ink for forming an anode-side electrode catalyst layer was coated on the other main surface, on which no cathode-side electrode catalyst layer was formed, of the polymer electrolyte membrane of the laminate by a die coating method using a slit die coater so that the amount of iridium oxide carried was 1.0 mg/cm² per area of the main surface. Then, the dispersion medium in the catalyst ink was removed by drying in an oven at 80°C. Thus, an anode-side electrode catalyst layer was formed on the polymer electrolyte membrane of the laminate, and a membrane electrode assembly for a water electrolysis device was obtained.

### <Example 2B>

A membrane electrode assembly for a water electrolysis device was obtained in the same manner as in Example 1B, except that as the fibrous material, polymer fibers (cation exchange group: sulfonic acid group) were used instead of the carbon fibers in the preparation of the catalyst ink for forming a cathode-side electrode catalyst layer. The blending amount of the fibrous material was 0.05 times the mass of the cathode-side electrode catalyst layer. The fibrous material was confirmed to have an average fiber diameter of 200 nm and an average fiber length of 25 µm. Further, regarding the fibrous material, the amount of the polymer electrolyte adsorbed was confirmed to be 10 mg or more per 1 g of the fibrous material.

### <Example 3B>

A membrane electrode assembly for a water electrolysis device was obtained in the same manner as in Example 2B, except that in the preparation of the catalyst ink for forming a cathode-side electrode catalyst layer, the blending amount of the fibrous material was 0.5 times the mass of the carrier in the catalyst-containing material of the cathode-side electrode catalyst layer, and in the preparation of the catalyst ink for forming an anode-side electrode catalyst layer, the blending amount of the fibrous material was 0.1 times the mass of the anode-side electrode catalyst layer.

### <Example 4B>

### (Preparation of Catalyst Ink for Forming Cathode-Side Electrode Catalyst Layer)

First, the following catalyst-containing material, dispersion containing a polymer electrolyte, and fibrous material were mixed in a dispersion medium, and the mixture was subjected to a dispersion treatment with a planetary ball mill for 30 minutes. Thus, a catalyst ink for forming a cathode-side electrode catalyst layer was prepared. In this case, the catalyst ink was prepared so that the content percentage of the solid content in the catalyst ink was 10 mass%. The blending amount of the fibrous material was 0.5 times the mass of the carrier in the catalyst-containing material, and the blending amount of the polymer electrolyte was 0.8 times the mass of the carrier in the catalyst-containing material. In addition, the fibrous material was confirmed to have an average fiber diameter of 150 nm and an average fiber length of 15 µm. Regarding the fibrous material, the amount of the polymer electrolyte adsorbed was confirmed to be 10 mg or more per 1 g of the fibrous material.
·Catalyst-containing carrier: catalyst-carrying particles formed of a carbon carrier (product number "TEC61E54", manufactured by Tanaka Kikinzoku Kogyo K.K., amount of PtRu carried: 54 mass%) carrying PtRu
·Dispersion containing polymer electrolyte (ionomer): a dispersion (trade name "Nafion (registered trademark) DE2020", manufactured by FUJIFILM Wako Pure Chemical Corporation) containing Nafion (registered trademark) as a fluorine-based polymer electrolyte

·Fibrous material: carbon fibers (trade name "VGCF-H", manufactured by Showa Denko K.K.)
·Dispersion medium: a mixed solvent of ultrapure water and 1-propanol (water : 1-propanol = 1 : 1 (volume ratio))

### (Preparation of Catalyst Ink for Forming Anode-Side Electrode Catalyst Layer)

The following catalyst-containing material, dispersion containing a polymer electrolyte, and fibrous material were mixed in a dispersion medium, and the mixture was subjected to a dispersion treatment with a planetary ball mill for 30 minutes. Thus, a catalyst ink for forming an anode-side electrode catalyst layer was prepared. In this case, the catalyst ink was prepared so that the content percentage of the solid content in the catalyst ink was 10 mass%. The blending amount of the fibrous material was 0.2 times the mass of the carrier in the catalyst-containing material, and the blending amount of the polymer electrolyte was 0.4 times the mass of the carrier in the catalyst-containing material. In addition, the fibrous material was confirmed to have an average fiber diameter of 200 nm and an average fiber length of 25 µm. Regarding the fibrous material, the amount of the polymer electrolyte adsorbed was confirmed to be 10 mg or more per 1 g of the fibrous material.
·Catalyst-containing material: catalyst-carrying particles in which an iridium oxide is carried on a titanium oxide carrier
·Dispersion containing polymer electrolyte (ionomer): a dispersion (trade name "Nafion (registered trademark) DE2020", manufactured by FUJIFILM Wako Pure Chemical Corporation) containing Nafion (registered trademark) as a fluorine-based polymer electrolyte

·Fibrous material (ionomer adsorbing fibers): an ion exchange resin (cation exchange group: sulfonic acid group) as polymer fibers
·Dispersion medium: a mixed solvent of ultrapure water and 1-propanol (water : 1-propanol = 1 : 1 (volume ratio))

### (Production of Electrode Catalyst Layer)

Two polytetrafluoroethylene (PTFE) sheets were prepared as substrates, and used as a first substrate and a second substrate.

Then, the catalyst ink for forming an anode-side electrode catalyst layer was applied to one surface of the first substrate using a doctor blade method, and the coating film was dried in an air atmosphere at 80°C to produce an anode-side electrode catalyst layer. In this case, the amount of the catalyst ink for forming an anode-side electrode catalyst layer to be applied was adjusted so that the amount of the catalyst carried in the anode-side electrode catalyst layer was 0.3 mg/cm², and the anode-side electrode catalyst layer was thus produced.

Next, the catalyst ink for forming a cathode-side electrode catalyst layer was applied to one surface of the second substrate using a doctor blade method, and the coating film was dried in an air atmosphere at 80°C to produce a cathode-side electrode catalyst layer. In this case, the amount of the catalyst ink for forming a cathode-side electrode catalyst layer to be applied was adjusted so that the amount of the catalyst carried in the cathode-side electrode catalyst layer was 0.3 mg/cm², and the cathode-side electrode catalyst layer was thus produced.

### (Preparation of Membrane Electrode Assembly)

A part of the anode-side electrode catalyst layer formed on the first substrate was punched out together with the first substrate. In this case, the size of the anode-side electrode catalyst layer punched out together with the first substrate was 5 cm × 5 cm. Then, the punched anode-side electrode catalyst layer was disposed on one main surface of a fluorine-based polymer electrolyte (Nafion (registered trademark) 117) as a polymer electrolyte membrane having a thickness of 183 µm.

In addition, a part of the cathode-side electrode catalyst layer formed on the second substrate was punched out together with the second substrate. In this case, the size of the cathode-side electrode catalyst layer punched out together with the second substrate was 5 cm × 5 cm. Then, the punched cathode-side electrode catalyst layer was disposed on the other main surface of the polymer electrolyte membrane.

The anode-side electrode catalyst layer and the cathode-side electrode catalyst layer were transferred to the polymer electrolyte membrane by hot pressing at a transfer temperature of 130°C and a transfer pressure of 5.0 × 10⁶ Pa to obtain a membrane electrode assembly.

### <Example 5B>

A membrane electrode assembly was obtained in the same manner as in Example 4B, except that polymer fibers (average fiber diameter: 15 nm, cation exchange group: sulfonic acid group) having a nitrogen atom were used as the fibrous material in the catalyst ink for forming an anode-side electrode catalyst layer. Regarding the fibrous material (ionomer adsorbing fibers), the amount of the polymer electrolyte (ionomer) adsorbed was confirmed to be 10 mg or more per 1 g of the fibrous material.

### <Example 6B>

A membrane electrode assembly was obtained in the same manner as in Example 4B, except that polymer fibers (average fiber diameter: 800 nm, cation exchange group: sulfonic acid group) having a nitrogen atom were used as the fibrous material in the catalyst ink for forming an anode-side electrode catalyst layer. Regarding the fibrous material (ionomer adsorbing fibers), the amount of the polymer electrolyte (ionomer) adsorbed was confirmed to be 10 mg or more per 1 g of the fibrous material.

### <Example 7B>

A membrane electrode assembly was obtained in the same manner as in Example 4B, except that polymer fibers (average fiber diameter: 300 nm, cation exchange group: amino group) having a nitrogen atom were used as the fibrous material in the catalyst ink for forming an anode-side electrode catalyst layer. Regarding the fibrous material (ionomer adsorbing fibers), the amount of the polymer electrolyte (ionomer) adsorbed was confirmed to be 10 mg or more per 1 g of the fibrous material.

### <Example 8B>

A membrane electrode assembly was obtained in the same manner as in Example 1B, except that polymer fibers (average fiber diameter: 200 nm, cation exchange group: sulfonic acid group) having a nitrogen atom were used as the fibrous material in the catalyst ink for forming a cathode-side electrode catalyst layer. Regarding the fibrous material (ionomer adsorbing fibers), the amount of the polymer electrolyte (ionomer) adsorbed was confirmed to be 10 mg or more per 1 g of the fibrous material.

### <Comparative Example 1B>

A membrane electrode assembly was obtained in the same manner as in Example 4B, except that no fibrous material was blended in the preparation of the catalyst ink for forming an anode-side electrode catalyst layer.

### <Evaluation of Crack Occurrence>

In the membrane electrode assembly of each of Examples 1B to 8B and Comparative Example 1B, the surface of the anode-side electrode catalyst layer was observed with a microscope (magnification: 200 times) to confirm the state of occurrence of cracks. In this evaluation, a case where a crack with a length of 10 µm or more occurred was evaluated as "×", and a case where no crack with a length of 10 µm or more occurred was evaluated as "∘". The results are shown in Table 2.

**[Table 2]**

| | Evaluation of Cracks in Anode-Side Electrode Catalyst Layer |
|---|---|
| Example 1B | ○ |
| Example 2B | ○ |
| Example 3B | ○ |
| Example 4B | ○ |
| Example 5B | ○ |
| Example 6B | ○ |
| Example 7B | ○ |
| Example 8B | ○ |
| Comparative | × |
| Example 1B | |

### Reference Signs List

- 10: Polymer electrolyte membrane
- 20: Electrode catalyst layer
- 21, 31: Catalyst-containing material
- 21a: Catalyst
- 21b: Carrier
- 22, 32: Polymer electrolyte
- 23, 33: Fibrous material
- 25: Void
- 26: Aggregate
- 30: Second electrode catalyst layer (anode-side electrode catalyst layer)
- 100: Laminate
- 200: Membrane electrode assembly
- 300: Water electrolysis device

## Claims

1. A laminate for a water electrolysis device, comprising:
a polymer electrolyte membrane; and
an electrode catalyst layer provided on one surface of the polymer electrolyte membrane,
wherein the electrode catalyst layer includes a catalyst, a polymer electrolyte, and a fibrous material.

2. The laminate for a water electrolysis device according to claim 1,
wherein an average fiber diameter of the fibrous material is within a range of 100 nm or more and 1 µm or less.

3. The laminate for a water electrolysis device according to claim 1 or 2,
wherein the fibrous material is a material having a property of adsorbing the polymer electrolyte.

4. The laminate for a water electrolysis device according to claim 1 or 2,
wherein the fibrous material includes at least one of carbon fibers and polymer fibers.

5. The laminate for a water electrolysis device according to claim 4,
wherein the polymer fibers have a cation exchange group.

6. The laminate for a water electrolysis device according to claim 5,
wherein the polymer electrolyte included in the electrode catalyst layer is an ionomer.

7. The laminate for a water electrolysis device according to claim 4,
wherein the polymer fibers have proton conductivity.

8. The laminate for a water electrolysis device according to claim 4,
wherein the electrode catalyst layer includes an aggregate of the polymer fibers,
an average fiber length of the polymer fibers is more than 20 µm, and
a size of a void surrounding the aggregate is 20 µm or less.

9. The laminate for a water electrolysis device according to claim 4,
wherein the electrode catalyst layer includes an aggregate of the polymer fibers,
an average fiber length of the polymer fibers is 20 µm or less, and
a size of a void surrounding the aggregate is equal to or less than the average fiber length of the polymer fibers.

10. The laminate for a water electrolysis device according to claim 1,
wherein the electrode catalyst layer is a cathode-side electrode catalyst layer,
the catalyst is carried on a conductive carrier,
the fibrous material consists of carbon fibers, and
a blending amount of the fibrous material is within a range of 5 parts by mass or more and 50 parts by mass or less relative to 100 parts by mass of the carrier.

11. The laminate for a water electrolysis device according to claim 1,
wherein the electrode catalyst layer is a cathode-side electrode catalyst layer,
the catalyst is carried on a conductive carrier,
the fibrous material consists of polymer fibers, and
a blending amount of the fibrous material is within a range of 5 parts by mass or more and 20 parts by mass or less relative to 100 parts by mass of the carrier.

12. The laminate for a water electrolysis device according to claim 10 or 11,
wherein the carrier consists of carbon particles.

13. A water electrolysis device comprising:
a membrane electrode assembly; and
a pair of main electrodes provided so that the membrane electrode assembly is sandwiched by the main electrodes,
wherein the membrane electrode assembly has
the laminate for a water electrolysis device according to any one of claims 1 to 12, and
a second electrode catalyst layer provided on a surface of the polymer electrolyte membrane of the laminate for a water electrolysis device opposite to the electrode catalyst layer.

14. A membrane electrode assembly for a water electrolysis device, comprising:
the laminate for a water electrolysis device according to claim 1; and
a second electrode catalyst layer,
wherein the electrode catalyst layer, the polymer electrolyte membrane, and the second electrode catalyst layer are provided in this order,
the second electrode catalyst layer is a cathode-side electrode catalyst layer, and
the electrode catalyst layer is an anode-side electrode catalyst layer, and includes a catalyst-containing material containing the catalyst, the polymer electrolyte, and the fibrous material.

15. The membrane electrode assembly for a water electrolysis device according to claim 14,
wherein the cathode-side electrode catalyst layer includes a catalyst-containing material, a polymer electrolyte, and a fibrous material.

16. The membrane electrode assembly for a water electrolysis device according to claim 15,
wherein the fibrous material of the cathode-side electrode catalyst layer includes at least one of carbon fibers and polymer fibers, and
the fibrous material of the anode-side electrode catalyst layer includes polymer fibers.

17. The membrane electrode assembly for a water electrolysis device according to claim 16,
wherein the polymer fibers have proton conductivity.

18. The membrane electrode assembly for a water electrolysis device according to claim 16,
wherein the polymer fibers have a cation exchange group.

19. The membrane electrode assembly for a water electrolysis device according to claim 18,
wherein the polymer electrolyte included in the anode-side electrode catalyst layer and the cathode-side electrode catalyst layer is an ionomer.

20. The membrane electrode assembly for a water electrolysis device according to claim 15 or 16,
wherein the fibrous material in the cathode-side electrode catalyst layer consists of carbon fibers,
an average fiber diameter of the fibrous material is within a range of 50 nm or more and 300 nm or less, and
an average fiber length of the fibrous material is within a range of 1.0 µm or more and 20 µm or less.

21. The membrane electrode assembly for a water electrolysis device according to any one of claims 15 to 19,
wherein the fibrous material in the cathode-side electrode catalyst layer consists of polymer fibers,
an average fiber diameter of the fibrous material is within a range of 100 nm or more and 500 nm or less, and
an average fiber length of the fibrous material is within a range of 1.0 µm or more and 40 µm or less.

22. The membrane electrode assembly for a water electrolysis device according to any one of claims 14 to 21,
wherein an average fiber diameter of the fibrous material in the anode-side electrode catalyst layer is within a range of 100 nm or more and 500 nm or less, and
an average fiber length of the fibrous material is within a range of 1.0 µm or more and 40 µm or less.

23. The membrane electrode assembly for a water electrolysis device according to claim 15 or 16,
wherein the catalyst-containing material in the cathode-side electrode catalyst layer consists of catalyst-carrying particles having the catalyst and a carrier carrying the catalyst,
the fibrous material in the cathode-side electrode catalyst layer consists of carbon fibers, and
a blending amount of the fibrous material is within a range of 0.3 times or more and 1.5 times or less a mass of the carrier.

24. The membrane electrode assembly for a water electrolysis device according to any one of claims 15 to 19,
wherein the catalyst-containing material in the cathode-side electrode catalyst layer consists of catalyst-carrying particles having the catalyst and a carrier carrying the catalyst,
the fibrous material in the cathode-side electrode catalyst layer consists of polymer fibers, and
a blending amount of the fibrous material is within a range of 0.05 times or more and 0.3 times or less a mass of the carrier.

25. The membrane electrode assembly for a water electrolysis device according to any one of claims 15 to 24,
wherein a content percentage of the fibrous material in the anode-side electrode catalyst layer is within a range of 0.5 mass% or more and 20 mass% or less.

26. The membrane electrode assembly for a water electrolysis device according to any one of claims 15 to 25,
wherein a ratio R (DF1/DF2) of a content percentage (DF1) of the fibrous material in the cathode-side electrode catalyst layer to a content percentage (DF2) of the fibrous material in the anode-side electrode catalyst layer is more than 1.

27. The membrane electrode assembly for a water electrolysis device according to claim 26,
wherein the fibrous material in the cathode-side electrode catalyst layer consists of carbon fibers, and
the ratio R is 5 or more and 30 or less.

28. The membrane electrode assembly for a water electrolysis device according to claim 26,
wherein the fibrous material in the cathode-side electrode catalyst layer consists of polymer fibers, and
the ratio R is 1.1 or more and 15 or less.

29. The membrane electrode assembly for a water electrolysis device according to any one of claims 15 to 28,
wherein in at least one of the cathode-side electrode catalyst layer and the anode-side electrode catalyst layer, the polymer electrolyte is an ionomer, and the fibrous material consists of ionomer adsorbing fibers having a property of adsorbing the ionomer.

30. A water electrolysis device comprising, in order:
a cathode;
a membrane electrode assembly; and
an anode,
wherein the membrane electrode assembly is the membrane electrode assembly for a water electrolysis device according to any one of claims 14 to 29.
